# EUROPÄISCHE PATENTSCHRIFT

(11) **EP 4 703 938 B1**
(45) Veröffentlichungstag und Bekanntmachung des Hinweises auf die Patenterteilung: **26.08.2026**
(21) Anmeldenummer: 24198236.2
(22) Anmeldetag: 03.09.2024
(51) Int. Cl.: G06F 21/60, H04L 9/08, H04L 9/32

(54) **SYSTEM, VERFAHREN UND COMPUTERPROGRAMMPRODUKT ZUR SICHEREN KOMMUNIKATION ZWISCHEN ZWEI AKTEUREN**
SYSTEM, METHOD AND COMPUTER PROGRAM PRODUCT FOR SECURE COMMUNICATION BETWEEN TWO ACTORS
SYSTÈME, PROCÉDÉ ET PRODUIT DE PROGRAMME INFORMATIQUE POUR UNE COMMUNICATION SÉCURISÉE ENTRE DEUX FICHIERS

(43) Veröffentlichungstag der Anmeldung: 04.03.2026
(73) Patentinhaber: KAPRION Technologies GmbH, 01217 Dresden (DE)
(72) Erfinder: RÖDER, André, 01217 Dresden (DE); RÖDER, Klaus, 01217 Dresden (DE); EHRLICH, Tobias, 01217 Dresden (DE)
(74) Vertreter: Kailuweit & Uhlemann Patentanwälte Partnerschaft mbB

(56) Entgegenhaltungen:
- EP-A1- 4 254 234
- DE-A1- 102021 112 754
- US-A1- 2003 217 258

## Beschreibung

Die Erfindung betrifft ein System, aufweisend mindestens ein ID-Wallet (digitale Identitäts-Brieftaschen) und mindestens ein Hardware-Sicherheitsmodul (HSM), zum sicheren Austausch digitaler Nachweise zwischen zwei Akteuren eines gemeinsamen digitalen ID-Ökosystems, sowie ein Verfahren und ein Computerprogrammprodukt zur sicheren Kommunikation zwischen zwei solcher Systeme zur Verwaltung von digitalen Nachweisen.

Aufgrund des weltweiten Anstiegs des Durchschnittsalters und somit des nicht-werktätigen Anteils der Gesamtbevölkerung steigt der Bedarf an Automatisierung und damit einhergehender Digitalisierung in nahezu allen Wirtschafts- und Gesellschaftsbereichen, einschließlich den Bereichen der Verwaltung und der staatlichen und zwischenstaatlichen Behörden.

Eine Digitalisierung der Verwaltung erfordert sichere digitale Identitäten, die nicht kopierbar sind. Digitale Identitäten sind in Computersystemen gespeicherte Daten, die sich auf Personen, Organisationen, Anwendungen oder Geräte beziehen. Für Personen können sie die personenbezogenen Daten, die zur Bestätigung der jeweiligen eigenen Identität und für die Verwaltung der Interaktionen zwischen verschiedenen Parteien durch digitale Systeme notwendig sind, umfassen.

Ferner sind Verfahren erforderlich, die das Ausstellen, das sichere Überprüfen, das Übertragen und das Verwalten im Allgemeinen von digitalen Nachweisen ermöglichen und sicherstellen, dass diese nicht beliebig kopiert werden können.

Aus dem Stand der Technik sind Verfahren zur Verwaltung digitaler Identitäten und digitaler Nachweise bekannt.

Ein ID-Wallet ist eine Software zur Verwaltung überprüfbarer digitaler Nachweise in Kombination mit einem der Software zugeordneten und von der Software verwalteten, zur Speicherung von digitalen Nachweisen bestimmter Speicherbereich auf der Hardware, auf der die Software läuft. Ein überprüfbarer digitaler Nachweis ist ein digitaler Nachweis, der von seinem Aussteller mit Information versehen ist, die es einem Prüfer erlaubt, bestimmte Attribute eines digitalen Nachweises zu überprüfen. So kann anhand einer digitalen Signatur des Ausstellers, die ein digitaler Nachweis aufweist, die Identität des Ausstellers überprüft werden. Anhand eines kryptographischen Hashs (eines kryptographischen Streuwertes), den ein digitaler Nachweis aufweist, kann die Authentizität des digitalen Nachweises geprüft werden. Ferner kann ein digitaler Nachweis mit einem Identifikator des Inhabers versehen werden, der es einem Prüfer erlaubt, festzustellen, an wen der Nachweis herausgegeben wurde.

Durch Abgleich mit verschiedenen zentralen und/oder dezentralen Vertrauensregistern können mittels eines ID-Wallets weitere Attribute des Nachweises überprüft werden.

Durch Abgleich mit einem Gültigkeitsregister, kann ein ID-Wallet eines Prüfers prüfen, ob ein digitaler Nachweis gültig ist. Ein Register der Schemata der überprüfbaren Nachweise erlaubt es dem ID-Wallet des Prüfers festzustellen, ob das Schema des digitalen Nachweises korrekt ist. Ob ein Aussteller berechtigt war, einen digitalen Nachweis auszustellen, kann das ID-Wallet des Prüfers durch Abgleich mit einem Aussteller-Register prüfen. Des Weiteren kann das ID-Wallet des Prüfers durch Abgleich mit einem Register der ID-Wallets prüfen, ob das ID-Wallet den Anforderungen des ID-Ökosystems entspricht. Anhand eines Abgleichs mit einem Register dezentralisierter Identifikatoren (DID-Register), kann das ID-Wallet des Prüfers prüfen, ob der Inhaber des ID-Wallets dem Prüfer bekannt ist. Mittels eines Registers der Prüfer kann ein Inhaber eines digitalen Nachweises prüfen, ob ein Prüfer berechtigt ist, eine Prüfungsanfrage zu stellen.

Momentan auf dem Markt verfügbare ID-Wallets erlauben es nicht, alle im vorherigen Absatz genannten Prüfungen mittels Vertrauensregister durchzuführen.

Eine selbstbestimmte Identität (SSI) ist eine digitale Identität, die von einem Akteur für sich selber erzeugt und verwaltet werden kann. Dabei ist, im Unterschied zu anderen Arten digitaler Identitäten, keine weitere Instanz notwendig, welche die digitale Identität erstellt und erteilt. Somit hat der Akteur die Kontrolle darüber, welche von seiner digitalen Identität umfassten Daten er wem zu welchen Bedingungen übermittelt. Ein Akteur mit einer digitalen Identität ist innerhalb eines digitalen ID-Ökosystems gegenüber anderen Akteuren durch einen kryptographisch erzeugten digitalen Identifikator (DID) identifizierbar. Ein erster Akteur kann einen digitalen Nachweis, den er an einen zweiten Akteur herausgibt, mit einem seiner DID zugeordneten asymmetrischen Schlüssel signieren. Die DID des zweiten Akteurs wird bei der Herausgabe des Nachweises in die Signatur eingebunden. Der zweite Akteur kann sich bei Präsentation des digitalen Nachweises an einen dritten Akteur gegenüber diesem mit der DID des zweiten Akteurs identifizieren. Da die Signatur des digitalen Nachweises die DID des ersten Akteurs aufweist, ist für den dritten Akteur prüfbar, dass der erste Akteur den digitalen Nachweis ausgestellt hat. Da die Signatur des digitalen Nachweises auch die DID des zweiten Akteurs umfasst, ist für den dritten Akteur prüfbar, dass der zweite Akteur berechtigt ist, den digitalen Nachweis zu präsentieren.

Auf kryptografische Schlüssel, die nicht in einem nur für kryptografische Schlüssel dedizierten Speicher gespeichert, sondern in einem Speicher gespeichert sind, in dem auch andere Daten und/oder Software eines digitalen Endgerätes gespeichert werden, kann zumindest das Betriebssystem auf die kryptografischen Schlüssel zugreifen. Dadurch wären solche Schlüssel kopierbar. Daten, die so gespeichert sind, nennt man auch "in Software gespeichert".

Hardware-Sicherheitsmodule (HSM), auch bekannt als Hardware Security Modules oder Hardware Secure Modules sind Rechengeräte, welche die Speicherung und Verwaltung kryptografischer Schlüssel, sowie die Durchführung kryptografischer Berechnungen ermöglichen. So können sie ohne zusätzliche Software Daten ver- und entschlüsseln. Sie sind so konstruiert, dass sie physische Angriffe mit dem Ziel des Auslesens von Speicherinhalten erkennen und die Speicherinhalte löschen, keine Signale abstrahlen, die auf die in ihnen verarbeiteten Daten hinweisen und die in ihnen gespeicherten Daten (Programmcode, kryptografische Schlüssel, weitere Parameter) nur dediziert an kryptografisch autorisierte Komponenten über definierte Schnittstellen ausgeben. Dadurch sind die kryptografischen Schlüssel und die mit diesen verschlüsselten Daten vor Zugriff durch Angreifer geschützt. Sie können beispielsweise in einem USB-Stick integriert und so an den USB-Anschluss eines Endgerätes angeschlossen werden, oder in einer Chipkarte integriert und mittels eines Kartenlesegerätes an ein Endgerät angeschlossen werden.

HSMs werden zur zwei-Faktor-Authentisierung unter Nutzung eines Aufforderung-Antwort-Verfahren (auch bekannt als Challenge-Response-Verfahren) basierend auf Public-Key-Authentifizierung (Authentifizierung mittels öffentlicher Schlüssel), um zusätzlich zu einem weiteren Faktor eine Zugriffsberechtigung auf Online-Dienste nachzuweisen. Ein solcher weiterer Faktor kann beispielsweise ein Zugangskennwort oder ein digitales Personaldokument sein. Das Anwendungsprinzip sieht folgendermaßen aus: Akteur B hat das Schlüsselpaar b, bestehend aus privatem Schlüssel und öffentlichem Schlüssel. B gibt den öffentlichen Schlüssel an Akteur A, um von diesem identifiziert werden zu können. Die privaten Schlüssel werden jedoch in Software gespeichert, weshalb sie prinzipiell kopiert werden können.

Das Prinzip ist somit nicht für SSI-basiertes Identitätsverwaltung anwendbar, da digitale Identitäten mangels wirksamem Kopierschutz mehrfach existieren können.

Bei der aus dem Stand der Technik bekannten föderierten Identitätsverwaltung ist es möglich, Attribute einer Identität (auch bekannt als Identitätsmerkmale) auf einem HSM zu speichern. Mittels föderierte Identitätsverwaltung kann ein Akteur mit einer Identität gegenüber verschiedenen miteinander kooperierenden Akteuren (wie z.B. verschiedenen miteinander kooperierenden Webdienstleistern oder miteinander kooperierenden Behörden verschiedener Staaten) authentifizieren, wobei jeder dieser miteinander kooperierenden Akteure entweder einer zentralen Authentifizierungsstelle traut oder jeder Authentifizierungsstelle der jeweils anderen kooperierenden Akteuren traut.

Föderierte Identitätsverwaltung ist somit auch nicht für SSI-basierte Identitätsverwaltung anwendbar, weil sichere Kommunikation nur mittels einer Authentifizierungsstelle möglich ist und eine selbstbestimmte Weitergabe von Daten durch den Inhaber einer Identität mit seinem digitalen Endgerät nicht möglich ist.

Gemäß dem Stand der Technik werden im Zusammenhang mit HSMs implizite Verfahren zur Datenübertragung verwendet. Das bedeutet, dass das zur Interpretation der Daten erforderliche Wissen beim Empfänger vorliegen muss. In Chipkarten-basierten Anwendungen, wie z.B. dem elektronischen Identitätsnachweis der Bundesrepublik Deutschland (elD), werden die Attribute der Identität des Halters in der Chipkarte, wie z.B. einem Personalausweis mit elD-Funktion, gespeichert. Diese Attribute werden beispielsweise in Tag-Length-Value-Formaten (TLV-Formaten), auch als Type-Length-Value-Formaten oder Typ-Länge-Wert-Formaten bekannt gespeichert. Bei Verwendung von TLV-Formaten müssen Sender und Empfänger zur Interpretation von übermittelten Daten erforderliches Wissen austauschen, wodurch die Interoperabilität behindert wird.

Zur Implementation von SSI werden nach dem Stand der Technik selbstbeschreibende Datenformate, beispielsweise das JSON-Format, zur Abbildung von digitalen Nachweisen verwendet. Die überprüfbaren Nachweise nehmen dabei einen größeren Speicherplatz ein, enthalten jedoch zur Interoperabilität ausreichend Information, so dass Sender und Empfänger zur Interpretation von übermittelter Information kein zusätzlich erforderliches Wissen austauschen müssen. Ein Inhaber einer ID-Wallet kann jedoch nicht prüfen, ob ein Vertrauensregister (z.B. ein Register der Entitäten, die eine Zulassung haben, einen bestimmten Typ überprüfbarer Nachweise auszustellen), auf welches der überprüfbare Nachweis verlinkt und/oder verweist, authentisch oder gefälscht ist.

Im Stand der Technik weisen Webbrowser und Betriebssysteme Trust-Stores auf, die die Funktion haben, organisatorische Vertrauensanker abzubilden und digitale Zertifikate zu verwalten. Solche organisatorischen Vertrauensanker sind in den meisten Fällen Zertifikate, die mittels qualitätsgeprüfter Verfahren von Zertifizierungsstellen (auch bekannt als Certificate Authorities) erstellt werden. Diese durch Zertifizierungsstellen ausgestellten Zertifikate sind selbst-signiert und werden auch Root-Zertifikate genannt. Die Zertifizierungsstellen sind per Gesetz und/oder Audits dazu befugt, Root-Zertifikate auszustellen. Die Audits und die der Erstellung von Root-Zertifikaten zugrundeliegenden Verfahren sind den meisten Nutzern von Webbrowsern und Betriebssystemen jedoch unklar. Darüber hinaus würden in dem Fall, das eine Zertifizierungsstelle kompromittiert ist alle Nutzer derer Root-Zertifikate als Vertrauensanker davon betroffen sein. So können digitale Identitäten und Zugangsdaten von Nutzern von Angreifern entwendet werden.

In der Druckschrift US 11,900,340 B1 werden dezentrale Netzwerke und deren Anwendung zur sicheren Übertragung digitaler Vermögenswerte beschrieben. Der Hauptfokus liegt auf der Verwaltung dezentraler Identitäten, um die Kontrolle über persönliche Daten zu verbessern. Das Verfahren zur Verwaltung sicherer digitaler Identitäten basiert auf dem Prinzip der selbstbestimmten Identität (SSI) unter Verwendung dezentraler Identifikatoren (DIDs) und verifizierbarer Anmeldeinformationen.

Ein Identitäts-Wallet auf einem digitalen Endgerät wird zur Verwaltung der dezentralen Identität und der damit verbundenen Daten verwendet.

Ein Hardware-Sicherheitsmodul fügt zusätzliche Sicherheitsschichten hinzu. Ein Beispiel ist der Einsatz eines Wallet-Hardware-Schlüssels, der sensorische Eingaben wie Fingerabdruck oder PIN verwendet, um den Zugriff zu steuern.

Ein Applet zur Verwaltung und Sicherung von dezentralen Identifikatoren und der damit verbundenen Daten durch den Einsatz eines Applet-basierten API-Sharing-Mechanismus innerhalb einer gesicherten Umgebung wird verwendet.

Das Dokument beschreibt Mechanismen zur sicheren und flexiblen Freigabe von digitalen Nachweisen zwischen verschiedenen Dienstleistern und Nutzern, einschließlich der Verwendung von APIs und spezifischen Zugriffskontrollen, die durch den Benutzer definiert werden. Nachteilig sind private Schlüssel dabei in Software gespeichert und nicht unveränderbar. Kryptografische Berechnungen finden dezentral statt. Dadurch ist die Sicherheit der kryptografischen Rechnungen nicht gewährleistet.

Die EP 4 092 958 A1 und die DE 10 2021 112754 A1 offenbaren ein Verfahren und ein System zum Auslesen von Nutzerattributen aus einem ID-Token mittels eines ID-Providers und Bereitstellen eines verifizierbaren digitalen Nachweises mit den ausgelesenen Nutzerattributen in einem ID-Wallet eines mobilen Endgeräts unter Verwendung eines Ausstellerdienstes einer Infrastruktur für selbstbestimmten Identitäten (SSI-Infrastruktur). Dabei sind die Nutzerattribute in einem geschützten Speicherbereich des ID-Tokens gespeichert. Die SSI-Infrastruktur umfasst eine Blockchain mit einem Datenschema und ein dem Ausstellerdienst zugeordneter öffentlicher Signaturprüfschlüssel zum Prüfen des digitalen Nachweises, bzw. dessen Signatur.

Das mobile Endgerät sendet eine Anfrage zum Ausstellen des digitalen Nachweises an den Ausstellerdienst zum Auslesen der Nutzerattribute durch den ID-Provider aus dem ID-Token. Das mobile Endgerät gibt dem ID-Provider Lesezugriff auf die Nutzerattribute im ID-Token, zum Weiterleiten der Nutzerattribute an den Ausstellerdienst.

Das ID-Wallet empfängt den vom Ausstellerdienst ausgestellten digitalen Nachweis. Der Nachweis ist dabei in Übereinstimmung mit dem in der Blockchain bereitgestellten Datenschema aufgebaut.

In Ausführungsformen sind das Schlüsselmaterial und mit diesem verschlüsselte digitale Nachweise auf einem Sicherheitselement im mobilen Endgerät gespeichert. Nur autorisierte Dienste und Anwendungen können kryptographische Mittel im Sicherheitselement einbringen, ergänzen, verändern und/oder löschen.

Nachteilig ist die Nutzung der Blockchain-Technologie, deren Energieverbrauch hoch ist und deren großskaliger Einsatz eine hohe Rechenleistung erfordert.

Das EP 4 254 234 A1 betrifft ein Verfahren zum Ausstellen eines digitalen Credentials für eine Entität durch ein Ausstellercomputersystem. Das Verfahren umfasst das Empfangen einer Ausstellanfrage über ein Netzwerk von einem anfragenden Computersystem. Die Ausstellanfrage enthält eine der anfragenden Entität zugeordnete Domain, eine E-Mail-Adresse eines offiziellen Vertreters der Entität sowie einen dezentralisierten Identifikator (DID). Das Ausstellercomputersystem stellt daraufhin das digitale Credential mit entitätsbezogenen Attributen unter Verwendung eines digitalen Registerauszugs aus und sendet es als Antwort auf die empfangene Ausstellanfrage über das Netzwerk an das anfragende Computersystem.

Ein vom Inhaber bereitgestelltes digitales, verifizierbares Credential wird von einem Prüfer unter Nutzung einer SSI-Infrastruktur auf seine Gültigkeit überprüft, wobei der Prüfer auf Blockchain zugreift, die die für die Verifizierung erforderlichen Daten bereitstellt.

Wie bereits erwähnt, besteht ein Nachteil der Verwendung der Blockchain-Technologie darin, dass sie einen hohen Energieaufwand verursacht, bei großskaliger Nutzung erhebliche Rechenressourcen erfordert.

In US 2003/217258 A1 wird ein Verfahren zum sicheren Übertragen von sicherheitsrelevanten Datenelementen zwischen zwei Hardware-Sicherheitsmodulen (HSMs), die an ein Computersystem angeschlossen sind. Wenn ein erstes HSM sicherheitsrelevanten Datenelementen an ein zweites HSM übertragen muss, teilt es dies dem zweiten HSM mit. Das zweite HSM generiert dann ein temporäres Paar aus öffentlichem Schlüssel und privatem Schlüssel und überträgt den öffentlichen Schlüssel an das erste HSM. Das erste HSM verwendet dann den übertragenen öffentlichen Schlüssel, um die sicherheitsrelevanten Datenelementen zu verschlüsseln, bevor es sie an das zweite HSM überträgt. Bei der Erzeugung des Paares aus öffentlichem und privatem Schlüssel startet das erste HSM außerdem einen Timer. Der Timer wird verwendet, um sicherzustellen, dass die kurzlebigen Schlüssel nicht länger als vorgesehen verwendet werden.

Die US 2008/0307515 A1 beschreibt ein Verfahren zur Authentifizierung eines Benutzers, welches die folgenden Schritte umfasst:
- Senden einer Authentifizierungsanfrage an eine entfernte Authentifizierungsvorrichtung;
- Erzeugen eines ersten Teils von Authentifizierungsinformationen;
- Empfangen in einem Mobilgerät der ersten Authentifizierungsinformation von einem Zugangsterminal oder der entfernten Authentifizierungsvorrichtung;
- Erzeugen einer zweiten Authentifizierungsinformation im Mobilgerät des Benutzers, die zumindest teilweise auf der empfangenen ersten Authentifizierungsinformation basiert;
- Senden der zweiten Authentifizierungsinformation an die entfernte Authentifizierungsvorrichtung;
- Validieren der zweiten Authentifizierungsinformation und Erzeugen eines Authentifizierungssignals im Falle der erfolgten Validierung.

Nachteilig sind private Schlüssel dabei in Software gespeichert, wodurch sie kompromittiert werden können.

Die Druckschrift DE 10 2011 110 898 A1 offenbart Verfahren zur Authentifizierung eines Benutzers zum Gewähren eines Zugangs zu Diensten eines Computersystems, umfassend:
- Senden einer Authentifizierungsanfrage von einem Kommunikationsgerät, das dem Benutzer zugeordnet ist, an einen Authentifizierungsserver, wobei die Authentifizierungsanfrage eine Transaktionskennung, sowie eine den Benutzer identifizierende Benutzerkennung enthält;
- Austauschen verschlüsselter Nachrichten zwischen dem Authentifizierungsserver und dem Kommunikationsgerät, wobei der Authentifizierungsserver zur Verschlüsselung einen zur Benutzerkennung gehörenden kryptografischen Schlüssel und das Kommunikationsgerät zur Verschlüsselung einen für den Authentifizierungsserver spezifischen kryptografischen Schlüssel verwendet;
- Bestimmen eines Authentifizierungsergebnisses in dem Authentifizierungsserver auf Grundlage der in den ausgetauschten verschlüsselten Nachrichten enthaltenen Daten;
- Senden des Authentifizierungsergebnisses von dem Authentifizierungsserver an das Computersystem und Gewähren eines Zugangs des Benutzers zu Diensten des Computersystems im Falle der erfolgten Authentifizierung.

Eine Authentifizierungsapplikation auf dem Kommunikationsgerät des Benutzers besitzt den privaten Schlüssel. Nachteilig ist dieser in Software gespeichert, wodurch er von einem Angreifer entwendet werden könnte.

In der Druckschrift WO 2023/034284 A1 wird ein System und ein Verfahren zur Nutzung in der Implementation von selbstbestimmten digitalen Nachweisen beschrieben. Ein computerimplementiertes Verfahren zur Verwendung bei der Bereitstellung eines verifizierbaren Berechtigungsnachweises für einen Vertrauensgeber, umfassend:
- Empfangen einer Identitätsanforderung von einem Vertrauensgeber durch einen Identitätsanbieter (IDP);
- Leiten der Identitätsanforderung durch den IDP an einen Benutzer einer Anwendung an einem Mobilgerät des Benutzers, wobei das Mobilgerät einen verifizierbaren Berechtigungsnachweis enthält;
- Empfangen des verifizierbaren Berechtigungsnachweises durch den IDP vom Mobilgerät;
- Verifizieren des verifizierbaren Berechtigungsnachweises durch die den IDP auf der Grundlage eines öffentlichen Schlüssels, der mit einem Aussteller des verifizierbaren Berechtigungsnachweises verbunden ist;
- Übertragen einer ersten Autorisierung des verifizierbaren Berechtigungsnachweises an den Vertrauensgeber durch den IDP;
- Empfangen einer Anforderung von Identitätsdaten vom Vertrauensgeber durch den IDP, wobei die Identitätsdatenanforderung eine zweite Autorisierung bezüglich des überprüfbaren Berechtigungsnachweises enthält; und
- als Reaktion auf die Übereinstimmung der ersten Autorisierung mit der zweiten Autorisierung, Übergabe der Identitätsdaten an den Vertrauensgeber.

Es besteht auch die Möglichkeit, dass der verifizierbare Berechtigungsnachweis durch einen privaten Schlüssel signiert wird. Nachteilig ist dieser in Software gespeichert.

In der Druckschrift DE 10 2020 130 815 B3 wird ein Verfahren zum selektiven Bereitstellen von Benutzerdaten mit folgenden Schritten offenbart:
- Authentifizieren eines Benutzers;
- Autorisieren einer Bereitstellung von mittels einer zentralen Einheit (einem Authentifizierungsserver oder einer äquivalenten Einrichtung) angeforderten Benutzerdaten des Benutzers; und
- Bereitstellen der angeforderten Benutzerdaten zum Übertragen an die zentrale Einheit, wobei das Autorisieren und das Bereitstellen der angeforderten Benutzerdaten mittels einer dezentralen Vorrichtung (einem mobilen Endgerät oder ein äquivalenten Endgerät des Nutzers) erfolgen und wobei das Bereitstellen der angeforderten Benutzerdaten das Verschlüsseln von auf der dezentralen Vorrichtung gespeicherten Benutzerdaten umfasst und wobei die zentrale Einheit nicht über den Schlüssel zum Entschlüsseln der verschlüsselten Benutzerdaten verfügt.

Das Verfahren weist keine privaten Schlüssel auf und die dezentralen Identifikatoren basieren auf Blockchain-Technologie.

Nachteilig am Stand der Technik ist die sowohl die mangelnde Selbstbestimmtheit der Akteure als auch und die mangelnde Sicherheit ihrer personenbezogener Daten, sowie der von den Akteuren gehaltenen digitalen Zertifikate.

Aufgabe ist es daher, ein System und ein Verfahren bereitzustellen, welche die Nachteile des Standes der Technik überwinden und die Fälschung digitaler Nachweise verhindern, sowie einen Kopierschutz für diese und für digitale Identitäten ermöglichen.

Erfindungsgemäß wird die Aufgabe durch ein System mit den Merkmalen des Anspruchs 1, ein Verfahren mit den Merkmalen des Anspruchs 7, sowie Verwendungen mit den Merkmalen des Anspruchs 14 gelöst. Vorteilhafte Ausgestaltungen der Erfindung sind in den abhängigen Ansprüchen angegeben.

Ein erster Aspekt der Erfindung betrifft ein System zur sicheren Ausstellung, zum sicheren Empfang, zur sicheren Präsentierung und zur sicheren Überprüfung digitaler Nachweise zwischen zwei Akteuren eines gemeinsamen digitalen ID-Ökosystems nach Anspruch 1. Das System weist insbesondere
- mindestens ein erstes, operativ nicht manipulierbares Hardware-Sicherheitsmodul , welches so konstruiert ist, dass dessen Funktionen nur durch Nutzung einer Anwendungsprogramm-HSM-Schnittstelle eines ersten Anwendungsprogramms steuerbar sind und dass in vom ersten Anwendungsprogramm verwalteten Registern gespeicherte Daten zum Teil überhaupt nicht und zum Teil nur durch im ersten Anwendungsprogramm (200) installierten Funktionen generiert, geändert, oder gelöscht werden können,
- mindestens eine erste ID-Wallet, aufweisend mindestens eine zur Kommunikation mit mindestens einer zweiten ID-Wallet geeigneten ID-Wallet-zu-ID-Wallet-Kommunikationsschnittstelle,
- mindestens ein erstes digitales Endgerät, wobei auf dem die erste ersten ID-Wallet installiert ist, wobei die erste ID-Wallet mittels einer ID-Wallet-HSM-Kommunikationsschnittstelle mit dem ersten Hardware-Sicherheitsmodul verbunden ist und dazu ausgelegt ist, unter Verwendung der Anwendungsprogramm-HSM-Schnittstelle mit einem ersten Anwendungsprogramm zu kommunizieren,
- mindestens ein erstes auf dem ersten Hardware-Sicherheitsmodul gespeichertes, operativ nicht manipulierbares Anwendungsprogramm, das dazu ausgebildet ist, eine Kommunikation zwischen dem ersten Hardware-Sicherheitsmodul und dem ersten digitalen Endgerät herzustellen, zu steuern und zu verwalten, sowie Rechenoperationen auf dem ersten Hardware-Sicherheitsmodul auszuführen,
   wobei
- das erste Hardware-Sicherheitsmodul das mindestens eine Installateurs-Schlüsselregister zur Speicherung von mindestens einem kryptografischen Schlüssel aufweist und der zur symmetrisch verschlüsselten Kommunikation zwischen dem ersten, auf dem ersten Hardware-Sicherheitsmodul gespeicherten, Anwendungsprogramm und einem zweiten, auf einem zweiten Hardware-Sicherheitsmodul gespeicherten Anwendungsprogramm, mittels der ersten ID-Wallet und der zweiten, mit mindestens der zur Kommunikation mit der ersten ID-Wallet geeigneten ID-Wallet-zu-ID-Wallet-Kommunikationsschnittstelle ausgestatteten ID-Wallet geeignet ist,
- das erste Hardware-Sicherheitsmodul mindestens ein Identitäts-Schlüsselregister zur Hinterlegung von mindestens einem privaten Schlüssel aufweist,
- das erste Hardware-Sicherheitsmodul mindestens ein Register digitaler Nachweise aufweist, wobei das Register digitaler Nachweisedazu geeignet ist, Registereinträge digitaler Nachweise zu enthalten, wobei die Registereinträge Bezeichnungen von digitalen Nachweisen sowie Hashwerte dieser digitalen Nachweise, Informationen über einen Aussteller, Signaturen und Zustände dieser digitalen Nachweise umfassen,
- das erste Hardware-Sicherheitsmodul dazu eingerichtet ist,
   o kryptografische Rechenoperationen durchzuführen,
   o mittels des ersten Anwendungsprogramms mindestens eine selbstbestimmte Identität (SSI) und mindestens ein zur SSI gehöriges, zu einer asymmetrischen Verschlüsslung geeignetes Schlüsselpaar zu erzeugen, abzuspeichern, zu löschen und/oder zu verwalten, wobei das geeignete Schlüsselpaar einen privaten und einen öffentlichen Schlüssel umfasst,
   o mindestens einen, als dezentralisierten Identifikator (DID) definierten, berechneten Hashwert des öffentlichen Schlüssels der SSI, in der ID-Wallet zu verwalten,
- das erste Hardware-Sicherheitsmodul
   o jegliche Übertragung privater Schlüssel aus dem Identitäts-Schlüsselregister des ersten Hardware-Sicherheitsmodul heraus oder in diesen hinein verhindert und
   o Übertragungen öffentlicher Schlüssel mittels der Anwendungsprogramm-HSM-Schnittstelle ermöglicht,
auf.

Öffentliche Schlüssel können auch als Public Keys (oder PUK) und private Schlüssel als Private Keys bezeichnet werden.

Im Sinne der Erfindung ist ein digitaler Nachweis (auch als Credential bekannt) ein Satz von einer oder mehreren Aussagen eines Ausstellers. Ein überprüfbarer digitaler Nachweis (auch als Verifiable Credential bezeichnet) ist ein fälschungssicherer Nachweis, dessen Urheberschaft kryptografisch verifiziert werden kann. Überprüfbare digitale Nachweise können verwendet werden, um überprüfbare Präsentationen zu erstellen, die ebenfalls kryptografisch verifiziert werden können. Die Aussagen in einem Nachweis können sich auf verschiedene Themen beziehen. Zum Beispiel können Sie Aussagen über Berechtigung zur Nutzung einer Dienstleistung, einer Ressource oder einer Vorrichtung sein. Beispiele digitaler Nachweise sind digitale Ausweisdokumente (wie z.B. elektronische Identitätsnachweise [elD], digitale Führerscheine, digitale Bankkontoverfügungsberechtigungen oder ähnliche), Nachweisdokumente (wie z.B. amtliche Bescheinigungen, Registerauszüge, Berechtigungsnachweise, Urkunden, oder ähnliche), oder werthaltige digitale Nachweise (wie z.B. digitale Schuldscheine, digitale Währung, z.B. digitale Zentralbankwährung (Central Bank Digital Currency - CBDC), digitale Einzugsermächtigungen, Konzertkarten, Fahrkarten, Tickets im Allgemeinen).

Im Sinne der Erfindung kann ein Akteur eine Entität einer Vielzahl von Arten sein. Beispielsweise können Akteure natürliche Personen, juristische Personen, Organisationen, Gesellschaften, hoheitliche Entitäten, Behörden, Völkerrechtssubjekte oder IoT-Objekte. IoT steht für Internet of Things (Internet der Dinge, oder Allesnetz) und loT-Objekte können auch als robotische, teilautonome oder vollautonome Vorrichtungen ausgebildet sei. Beispielsweise können ein (autonomes oder nicht-autonomes) Fahrzeug und eine elektrische Ladestation oder unbemannte Zapfsäule jeweils loT-Objekte sein.

Ein ID-Ökosystem ist im Sinne der Erfindung ein Ensemble einer interoperablen, vernetzten und/oder vernetzbaren digitalen Infrastruktur, die es Akteuren erlaubt, sich voreinander zu authentifizieren, sowie digitale Nachweise zu verwalten, untereinander zu präsentieren und/oder zu übertragen.

Im Sinne der Erfindung sind Hardware-Sicherheitsmodule (HSM) Rechengeräte, die mindestens einen Kryptoprozessor aufweisen. Sichere, für die Kryptografie relevante Komponenten von anderen Prozessoren (bspw. CPU oder GPU) sind keine Hardware-Sicherheitsmodule im Sinne der Erfindung. HSM sind gegenüber anderen Prozessortypen besonders manipulationsresistent und auch gegen unbefugten physischen Zugriff auf die in ihnen gespeicherten Daten geschützt. Es können auch selbstnivellierende Materialien in einem HSM vergossen sein und die Kryptoprozessoren eines HSM können so ausgelegt sein, dass auf ihnen gespeicherte Schlüssel beim Versuch, den Verguss zu entfernen, gelöscht oder auf einen Standardwert (z.B. eine Reihe Nullen) zurückgesetzt wird. Das Vergießen, wie auch das vergossene Material selber wird auch als Potting bezeichnet. Elektrische Leiterbahnen von HSM sind auch möglichst kurz, um Seitenkanalangriffe mittels Abfangens von durch kryptographische Operationen emittierter elektromagnetischer Strahlung zu erschweren.

Beispielsweise können Chipkarten (Smartcards oder Chipkarten), Dongles und/oder USB-Sticks HSM aufweisen.

In Ausführungsformen des Systems ist das Anwendungsprogramm als Applet ausgelegt.
Die ID-Wallets sind im Sinne der Erfindung jeweils die Kombination aus einer Software zur Verwaltung überprüfbarer digitaler Nachweise in Kombination mit einem der Software zugeordneten und von der Software verwalteten, zur Speicherung von digitalen Nachweisen bestimmter Speicherbereich auf der Hardware, auf der die Software läuft. Die ID-Wallet kann auf dem digitalen Endgerät gespeichert und ausgeführt werden, oder auf einer separaten Hardware gespeichert sein, wobei die separate Hardware zur Nutzung der ID-Wallet mit dem Endgerät verbunden wird und die ID-Wallet mittels des mobilen Endgerätes bedient wird.

Die digitalen Endgeräte können im Sinne der Erfindung jeweils eine mobile Recheneinheit (bspw. eine Smartwatch, ein Mobiltelefon, ein Smartphone, ein Phablet, ein Tablet-Computer, ein Netbook, ein Notebook, ein Kartenleser oder ein Fahrkartenscanner), ein Desktopcomputer, eine bedienerlose Recheneinheit (bspw. ein loT-Gerät), ein Rechner zur automatisierten Datenverarbeitung (bspw. ein Server oder ein Rechencluster) sein.

Die Kommunikationsschnittstelle kann beispielsweise eine DIDComm-Schnittstelle oder eine OpenlD4VC-Schnittstelle sein.

Die HSM und die digitalen Endgeräte können mittels einer aus dem Stand der Technik bekannten Kommunikationsverbindung miteinander verbunden sein. Diese können beispielsweise eine USB-Verbindung, einem USB-Chipkartenlesegerät, einer ISO 7816-3 Verbindung, eine Bluetooth-Verbindung, einem Bluetooth-Chipkartenlesegerät, eine WLAN-Verbindung, einem Adapter, eine Ethernet-Verbindung, eine Internetverbindung, eine Nahfeldkommunikationsverbindung, eine AirDrop-Verbindung oder eine Nearby-Share-Verbindung sein. Die Kommunikation kann auch ein ad-hoc-Netz sein. Die HSM können auch jeweils im digitalen Endgerät integriert sein, ohne jedoch in anderen Prozessoren des Endgerätes integriert zu sein. Im Rahmen dieser Anmeldung kann sich die Aussage, dass ein HSM mit einem Endgerät verbunden sei auch auf HSM beziehen, die in einem Endgerät integriert sind.

Die HSM weisen jeweils ein Installateurs-Schlüsselregister zur Speicherung von mindestens zwei, bevorzugt vier oder mehr kryptografischen Schlüsseln zur symmetrisch verschlüsselten Kommunikation mit einem zweiten HSM auf.

In Ausführungsformen ist das Installateurs-Schlüsselregister des jeweiligen HSM dazu ausgebildet zwischen 2 und 256 kryptografische Schlüssel zu enthalten.

Das Installateurs-Schlüsselregister, das Identitäts-Schlüsselregister und das Register digitaler Nachweise kann jeweils eine Datei umfassen oder aus einer Datei bestehen.

Im Register digitaler Nachweise (auch als Credential-Register bezeichnet) werden die Signaturen, die Aussteller-DIDs und Zustandsparameter der im Speicherbereich für digitale Nachweise registrierten digitalen Nachweise gespeichert.

Die Hashwerte (Streuwerte) digitaler Nachweise sind im Sinne der Erfindung Werte, die Anwendung einer Hashfunktion (Streuwertfunktion) auf die digitalen Nachweise ermittelt werden. Eine Hashfunktion ermittelt anhand der Daten, aus denen ein digitaler Nachweis besteht eine Zeichenfolge einer bestimmten Länge, wobei die Zeichenfolge einen geringeren Speicherplatz einnimmt, als der digitale Nachweis selber. Diese Zeichenfolge ist der Hashwert. Die Hashfunktion ist so ausgelegt, dass jedem digitalen Nachweis ein einzigartiger Hashwert entspricht. Jegliche Veränderung oder Manipulation eines digitalen Nachweises, würde, bei Anwendung einer Hashfunktion auf diesen Nachweis, zu einem anderen Hashwert führen.

Die Asymmetrische Verschlüsselung ist im Sinne der Erfindung eine Verschlüsselung, die auf mindestens einem Schlüsselpaar beruht, welches einen öffentlichen und einen privaten, geheimen Schlüssel aufweist. Ein Akteur 1 kann eine Information mit dem öffentlichen Schlüssel von einem Akteur 2 verschlüsseln. Die so verschlüsselte Information kann nur mit dem privaten Schlüssel von Akteur 2 entschlüsselt werden.

Das Verwalten des als dezentralisierten Identifikator (DID) definierten Hashwertes kann das Erzeugen, Speichern oder Löschen umfassen.

In Ausführungsformen des Systems ist die erste ID-Wallet dazu ausgelegt, den von ihr verwalteten Speicherbereich digitaler Nachweise auf dem ersten digitalen Endgerät mit einem kryptografischen Schlüssel der ersten ID-Wallet verschlüsselt abzuspeichern, wobei der kryptografische Schlüssel der ersten ID-Wallet nicht auf dem ersten digitalen Endgerät, sondern auf dem ersten HSM gespeichert ist.

In Ausführungsformen des Systems ist die erste ID-Wallet dazu ausgelegt, mittels der Nutzeroberfläche der ID-Wallet die Datenausgabe an einen Inhaber der ersten ID-Wallet und die Dateneingabe durch den Inhaber der ersten ID-Brieftasche zu ermöglichen.

Das erste HSM und/oder das zweite HSM weisen keine Schnittstelle auf, über die kryptografische Schlüssel, die als Grundlage einer DID dienen, in das jeweilige HSM importiert oder private kryptografische Schlüssel aus dem jeweiligen HSM exportiert werden können.

Dass das HSM operativ nicht manipulierbar ist bedeutet, dass mittels direkten physischen Zugriffs die im Installateurs-Schlüsselregister gespeicherten Schlüssel nicht durch einen Akteur ausgelesen und/oder verändert werden können und dass nur ein Installateur mittels Ansteuerung durch eine Software, im Installateurs-Schlüsselregister gespeicherten Schlüssel austauschen kann.

In Ausführungsformen des Systems weist die erste ID-Wallet wenigstens einen Speicher auf, der dazu geeignet ist, verschlüsselte digitale Nachweise zu enthalten, wobei Schlüssel zur Verschlüsselung der digitalen Nachweise im Hardware-Sicherheitsmodul gespeichert sind und der Speicher
- mindestens einen ersten Speicherbereich für digitale Nachweise für auf den Inhaber der ersten ID-Wallet ausgestellte überprüfbare digitale Nachweise aufweist, sowie
- mindestens einen zweiten Speicherbereich für auf vom Inhaber der ersten ID-Wallet als vertrauenswürdig eingestufte Akteure ausgestellte vertrauenswürdige digitalen Nachweise und/oder Nachweisketten aufweist, wobei die vertrauenswürdigen digitalen Nachweise und/oder Nachweisketten jeweils wenigstens einen ersten öffentlichen kryptografischen Schlüssel aufweisen.

Auf den Inhaber der ersten ID-Wallet ausgestellte überprüfbare digitale Nachweise können beispielsweise Nachweise über Eigenschaften oder Attribute des Inhabers sein, wie z.B. Altersnachweise, Geburtsdatum oder Nachweise über seinen Namen. Die auf den Inhaber der ersten ID-Wallet ausgestellten überprüfbaren digitalen Nachweise können auch boolesche Werte aufweisen, wie z.B. die Antwort auf die Frage,
- ob der Inhaber der ersten ID-Wallet ein bestimmtes Alter überschritten hat, oder
- ob der Inhaber der ersten ID-Wallet einer Gruppe angehört.

Im zweiten Speicherbereich werden digitale Nachweise hinterlegt, nachdem sie der ID-Wallet durch einen anderen Akteur präsentiert, erfolgreich durch die ID-Wallet kryptografisch bzgl. ihrer Integrität geprüft und vom Akteur als vertrauenswürdig eingestuft wurden. Ein solcher digitaler Nachweis enthält einen öffentlichen kryptografischen Schlüssel, der mit einer ebenfalls im digitalen Nachweis benannten digitalen Identität in Verbindung steht. Ein solcher digitaler Nachweis kann im Sinne einer Vertretungsberechtigung Rechte zur Ausstellung und/oder Kontrolle von Nachweis-Typen, welche im digitalen Nachweis referenziert sind, im Namen einer ausstellenden digitalen Identität beinhalten. Diese digitalen Nachweise können andere digitalen Nachweise im zweiten Speicherbereich referenzieren. Im Unterschied zum Trust-Store eines Webbrowsers werden im zweiten Speicherbereich der ID-Wallet keine Zertifikate abgelegt, die eine Aussage der Zuordnung von URL zu einer Entität oder einem Server treffen, sondern überprüfbare digitale Nachweise, die eine Aussage der Zuordnung eines DID zu einem öffentlichen Schlüssel und gegebenenfalls zu einem Akteur der Realwelt sowie gegebenenfalls einer mit dieser DID verbundenen anderen DID treffen.

Mit dem zweiten Speicherbereich der ID-Wallet wird die dezentrale Übertragung organisatorischer Vertrauensanker erreicht. Anstatt einem vollkommen unbekannten Zertifizierungsdienst z.B. in einem anderen Staat zu vertrauen, kann der Inhaber der Wallet sein digitales Vertrauen auf Organisationen begründen, die er kennt und denen er auch in der Realwelt selbst vertraut. Z.B. kann eine Kommune vertrauenswürdige mit einem öffentlichen Schlüssel versehene digitale Nachweise anderer Kommunen an die ID-Wallets ihrer Bürger verteilen. Durch von Kommune zu Kommune entstehende Vertrauensketten, kann sich Vertrauen im digitalen Raum fortpflanzen und im zweiten Speicherbereich einer ID-Wallet abbilden. Zusätzlich wird der zweite Speicherbereich der ID-Wallet durch vertrauenswürdige Kontakte des Inhabers gefüllt, indem beim Abspeichern eines überprüfbaren Nachweises im ersten Speicherbereich gleichzeitig die zugehörige mit dem überprüfbaren Nachweis übermittelte Nachweiskette bis zu dem, mit einem öffentlichen Schlüssel versehenen, digitalen Nachweis des Herausgebers im zweiten Speicherbereich der ID-Wallet abgespeichert wird. Eine Nachweiskette ist eine Serie von zwei oder mehr Nachweisen, von denen jeder Nachweis der Serie, bis auf der letzte Nachweis, zumindest den jeweils nächsten Nachweis referenziert, so dass alle Nachweise der Nachweiskette zumindest indirekt mittels Referenzen verbunden sind.

In Ausführungsformen kann die ID-Wallet mindestens einen dritten Speicherbereich aufweisen. Ist ein Akteur ein Prüfer mindestens eines überprüfbaren digitalen Nachweises eines anderen Akteurs, wird der überprüfbare Nachweis im dritten Speicherbereich gespeichert und nach Abschluss des Prüfvorgangs gegebenenfalls aus dem dritten Speicherbereich gelöscht.

Ist ein Akteur ein Aussteller mindestens eines überprüfbaren digitalen Nachweises, können Kopien ausgestellter überprüfbarer digitaler Nachweise in einem weiteren Speicherbereich gespeichert sein. Dies ist insbesondere zum Zweck eines Widerrufs überprüfbaren digitalen Nachweises von Vorteil.

In Ausführungsformen liegt mindestens ein überprüfbarer Nachweis mit jeweils mindestens einem symmetrischen Schlüssel verschlüsselt in der ID-Wallet vor.

Der erste Speicherbereich und/oder der zweite Speicherbereich können in Ausführungsformen mittels einem oder mehreren im Register digitaler Nachweise des HSM gespeicherten symmetrischen Schlüssel gespeichert sein.

Die überprüfbaren Nachweise weisen Signaturen ihrer Herausgeber auf.

In Ausführungsformen des Systems ermöglichen überprüfbare digitale Nachweise die Zuordnung von öffentlichen kryptografischen Schlüsseln zu entsprechenden digitalen Identitäten.

In Ausführungsformen des Systems ermöglichen überprüfbare digitale Nachweise Treffen von überprüfbaren Aussagen über Zuordnungen von DIDs zu entsprechenden Akteuren.

In Ausführungsformen des Systems ist das erste Anwendungsprogramm dazu ausgelegt, überprüfbare digitale Nachweise im Speicher der ersten ID-Wallet zu erzeugen, und/oder zu verwalten, wobei die überprüfbaren digitalen Nachweise eine Zuordnung zu einer DID des Ausstellers umfassen.

In Ausführungsformen des Systems ist die erste ID-Wallet dazu ausgelegt, die Integrität solcher vertrauenswürdiger digitaler Nachweise, die einen öffentlichen kryptografischen Schlüssel aufweisen und deren öffentlicher kryptografischer Schlüssel einer im vertrauenswürdigen digitalen Nachweis genannten digitalen Identität zugeordnet ist, kryptografisch zu prüfen, und das System dazu ausgelegt ist, solche vertrauenswürdigen digitale Nachweise in der ersten ID-Walletzu speichern.

In Ausführungsformen des Systems umfassen überprüfbare digitale Nachweise eine Zuordnung zu einer DID des Inhabers und/oder eine Zuordnung zu einer DID des Prüfers.

Ein Prüfer ist im Sinne der Erfindung ein Akteur, der einen überprüfbaren Nachweis eines Inhabers überprüft, insbesondere auf Authentizität und auf Gültigkeit.

Das Verwalten von überprüfbaren digitalen Nachweisen umfasst insbesondere das Speichern, das Löschen und/oder das Lesen.

In Ausführungsformen des Systems sind die im ersten und/oder zweiten Speicherbereich gespeicherten Wallet digitalen Nachweise dazu ausgelegt, mittels einem der symmetrischen kryptografischen Schlüssel symmetrisch verschlüsselt zu sein.

In Ausführungsformen des Systems ist die erste ID-Wallet dazu ausgelegt, die Integrität solcher der vertrauenswürdigen digitalen Nachweise, die einen öffentlichen kryptografischen Schlüssel aufweisen und deren öffentlicher kryptografischer Schlüssel einer im vertrauenswürdigen digitalen Nachweis genannten digitalen Identität zugeordnet ist, kryptografisch zu prüfen und zu speichern.

In Ausführungsformen des Systems ist der zweite Speicherbereich dazu ausgelegt, digitale Nachweise zu enthalten, welche einen oder mehrere andere im zweiten Speicherbereich enthaltene digitale Nachweise referenzieren.

In Ausführungsformen des Systems ist das Hardware-Sicherheitsmodul dazu eingerichtet, das erste Anwendungsprogramm auszuführen, wobei das erste Anwendungsprogramm dazu ausgelegt ist, die von den überprüfbaren digitalen Nachweisen aufgewiesenen öffentlichen kryptografischen Schlüssel und/oder vorrotierte Schlüssel zu erzeugen und im Identitäts-Schlüsselregister des Hardware-Sicherheitsmodul zu speichern, wobei das Hardware-Sicherheitsmodul die Anwendungsprogramm-HSM-Schnittstelle aufweist, die dazu ausgelegt ist, öffentliche kryptografische Schlüssel zu exportieren.

Ein vorrotierter Schlüssel ist ein zur späteren Nutzung vorgesehener Schlüssel, der noch nicht zum Entschlüsseln, Signieren oder Verschlüsseln verwendet wird, jedoch mit einem aktuellen Schlüssel signiert wurde, der zum Signieren und/oder Entschlüsseln und/oder Verschlüsseln verwendet wird.

Bevorzugt wird im Rahmen der Schlüsselvorrotation ein neues öffentlich-privates Schlüsselpaar zur späteren Nutzung erzeugt. Der neu erzeugte, zur späteren Nutzung vorgesehene öffentliche Schlüssel wird mit dem aktuellen privaten Schlüssel signiert. Wenn das alte Schlüsselpaar seine Gültigkeit verliert, kann der Inhaber des neuen Schlüsselpaares sich gegenüber anderen Akteuren durch den mit dem vorherigen privaten Schlüssel signierten neuen öffentlichen Schlüssel authentifizieren.

In Ausführungsformen des Systems ist die ID-Wallet-zu-HSM-Kommunikationsschnittstelle der erste ID-Wallet eine als eine erste HSM-Anwendungsprogramm-Programmierschnittstelle, auch bezeichnet als Application Programming Interface (API) ausgebildet. Die HSM-Anwendungsprogramm-Programmierschnittstelle der ersten ID-Wallet ist dazu ausgelegt, einen Datenaustausch zwischen dem ersten Anwendungsprogramm und der ersten ID-Wallet zu ermöglichen.

In Ausführungsformen des Systems weist das HSM eine Anwendungsprogramm-HSM-Schnittstelle auf. Die ID-Wallet auf dem digitalen Endgerät kommuniziert unter Verwendung der HSM-Anwendungsprogramm-Programmierschnittstelle und der Anwendungsprogramm-HSM-Schnittstelle mit dem Anwendungsprogramm .

In Ausführungsformen des Systems ist das erste Hardware-Sicherheitsmodul dazu ausgelegt, über die erste ID-Wallet, welche dazu ausgelegt ist mit einer von einem zweiten Endgerät aufgewiesenen zweiten ID-Wallet mittels mindestens eines Kommunikationsprotokolls zu kommunizieren, mit dem zweiten, mit der zweiten ID-Wallet verbundenen, Hardware-Sicherheitsmodul zu kommunizieren.

Dieses Kommunikationsprotokoll kann in Ausführungsformen zum Beispiel aber nicht ausschließlich aus den Protokollen DIDComm-V.2 oder OpenlD4VC ausgewählt sein.

In Ausführungsformen des Systems weisen die überprüfbaren digitalen Nachweise jeweils einen DID des Ausstellers auf und
- das erste Anwendungsprogramm ist so konfiguriert, dass es nur dem, vom zweiten Hardware-Sicherheitsmodul aufgewiesenen, Anwendungsprogramm ermöglicht ist, Registereinträge von digitalen Nachweisen im Register digitaler Nachweise des ersten Hardware-Sicherheitsmodul zu speichern, wobei diese Registereinträge entweder vom Aussteller direkt kommen und durch das erste Anwendungsprogramm geprüft wird, ob der Eintrag vom ersten Anwendungsprogramm signiert wurde oder die Registereinträge als übertragbar markiert sind und/oder
- können auf einen DID des Inhabers der ersten ID-Wallet ausgestellt sein
und das erste Anwendungsprogramm ist konfiguriert, einen Hashwert eines überprüfbaren digitalen Nachweises im Register digitaler Nachweise zu speichern oder zu löschen, wobei die Registereinträge überprüfbarer digitaler Nachweise mindestens eine Zustandsvariable aufweisen, wobei durch einen Zustand der Zustandsvariable bestimmt ist, ob der jeweilige überprüfbare digitale Nachweis kopierbar und/oder durch die erste ID-Wallet auf die zweite ID-Wallet verleihbar und/oder übertragbar ist.

In Ausführungsformen des Systems ist das Anwendungsprogramm nicht veränderbar und Daten in einem ersten Teil des Speichers des ersten Hardware-Sicherheitsmodul sind nur mittels des Anwendungsprogramms erzeugbar, änderbar oder löschbar und in einem zweiten Teil des Speichers sind Daten nicht erzeugbar, änderbar oder löschbar.

In Ausführungsformen des Systems weist das Installateurs-Schlüsselregister des ersten Hardware-Sicherheitsmodul mindestens einen ersten nicht auslesbaren geheimen symmetrischen Schlüssel (im Folgenden auch ersten Installateurs-Schlüssel genannt) auf, der dazu ausgelegt ist, mittels eines symmetrischen Verschlüsselungsverfahrens, die Erstellung mindestens eines Kommunikationsschlüssels zur verschlüsselten Kommunikation mit dem zweiten Hardware-Sicherheitsmodul mittels des ersten Endgerätes und des zweiten Endgerätes zu ermöglichen, wobei das zweite Hardware-Sicherheitsmodul ein Installateurs-Schlüsselregister aufweist und das Installateurs-Schlüsselregister des zweiten Hardware-Sicherheitsmodul denselben nicht auslesbaren geheimen symmetrischen Schlüssel aufweist, wie das Installateurs-Schlüsselregister des ersten Hardware-Sicherheitsmoduls. Das symmetrische Verschlüsslungsverfahren ist bevorzugt das Diffie-Hellman-Verfahren

In Ausführungsformen des Systems weist das Installateurs-Schlüsselregister des ersten Hardware-Sicherheitsmoduls mindestens einen zweiten nicht auslesbaren geheimen symmetrischen Schlüssel auf, der dazu ausgelegt ist, Änderungen durch einen Installateur im Installateurs-Schlüsselregister des ersten Hardware-Sicherheitsmodul durchzuführen.

Der Installateur kann den zweiten nicht auslesbaren geheimen symmetrischen Schlüssel nutzen um eine Zugriffsberechtigung bevorzugt dazu zu erhalten,
- das Anwendungsprogramm zu aktualisieren, zu warten und/oder in anderer Hinsicht zu verändern, sowie
- um Schlüssel auszutauschen.

Dass nur der Installateur im Besitz des zweiten nicht auslesbaren geheimen symmetrischen Schlüssels ist, gewährleistet, dass das HSM operativ nicht manipulierbar ist.

Ein weiterer Aspekt der Erfindung betrifft ein Verfahren zur sicheren Kommunikation zwischen zwei Systemen zur Überprüfung und/oder Übertragung von digitalen Nachweisen nach Anspruch 7. Das Verfahren eignet sich insbesondere zur Überprüfung und/oder Übertragung von überprüfbaren digitalen Nachweisen, wobei die erste ID-Wallet mit dem ersten Hardware-Sicherheitsmodul in Verbindung steht und die zweite ID-Wallet mit dem zweiten Hardware-Sicherheitsmodul in Verbindung steht, wobei das erste Anwendungsprogramm des ersten Hardware-Sicherheitsmoduls
- mindestens einen kryptografischen Schlüssel erzeugt und/oder verwaltet, wobei der Schlüssel dazu dient, mindestens einen überprüfbaren digitalen Nachweis in der ersten ID-Wallet zu ver- und/oder entschlüsseln und/oder zu signieren und/oder zu prüfen
- eine sichere Kommunikation mittels asymmetrischer Kryptographie aufbaut, wobei die Verschlüsselung durch das erste Hardware-Sicherheitsmodul erfolgt und jedes Hardware-Sicherheitsmodul jegliche Übertragung privater Schlüssel aus dem Schlüsselregister heraus oder in diesen hinein verhindert,
- verhindert, dass das Anwendungsprogramm des ersten Hardware-Sicherheitsmoduls den Inhalt seines eigenen Registers digitaler Nachweiseverändert.

Das Verwalten kryptografischer Schlüssel kann das Speichern und/oder das Löschen umfassen.

In Ausführungsformen des Verfahrens ist durch den Zustand mindestens einer Zustandsvariable mindestens eines Registereintrages im Register digitaler Nachweise des ersten Hardware-Sicherheitsmoduls der zu diesem Registereintrag zugeordnete mindestens eine überprüfbare digitale Nachweis im Speicherbereich für digitale Nachweise der ersten ID-Wallet als
- kopierbar oder nicht kopierbar gekennzeichnet, und/oder
- an die zweite ID-Wallet übertragbar oder nicht übertragbar gekennzeichnet und/oder
- an die zweite ID-Wallet verleihbar oder nicht übertragbar gekennzeichnet.

In Ausführungsformen weist das Verfahren zur Kommunikation zwischen zwei Systemen die Schritte auf:
- Generieren des einen oder der mehreren geheimen temporären symmetrischen kryptografischen Schlüssel, die zur Verschlüsslung des Informationsaustauschs zwischen dem ersten Hardware-Sicherheitsmodul und dem zweiten Hardware-Sicherheitsmodul ausgebildet sind,
- Generieren, mittels des ersten Anwendungsprogramms, des mindestens einen zur asymmetrischen Verschlüsslung geeigneten Schlüsselpaares als Wurzel einer SSI,
- Generieren und/oder Abspeichern und/oder Löschen und/oder Verwalten, von mindestens einem DID mittels des ersten Anwendungsprogramms unter Verwendung des öffentlichen Schlüssels der SSI,
- Verbinden der mindestens einen SSI in der ID-Wallet mit dem mindestens ersten Hardware-Sicherheitsmodul.

Der Informationsaustausch tritt dabei mittels des mit dem ersten HSM verbundenen ersten Endgerätes und des mit dem ersten Endgerät und mit dem zweiten HSM verbundenen zweiten Endgerätes auf.

In Ausführungsformen des Verfahrens werden die digitalen Nachweise in der ersten ID-Wallet mit einem kryptografischen Schlüssel verschlüsselt abgespeichert.

In Ausführungsformen des Verfahrens wird die Datenausgabe an den Inhaber der ersten ID-Wallet und die Dateneingabe durch den Inhaber der ersten ID-Wallet mittels eines Frontends durchgeführt.

Vorteilhaft kann das Frontend als Benutzerschnittstelle, besonders bevorzugt als grafische Benutzeroberfläche auf dem ersten Endgerät ausgebildet sein.

In Ausführungsformen des Verfahrens werden
- im ersten Speicherbereich für digitale Nachweise auf den Inhaber der ersten ID-Wallet ausgestellte überprüfbare digitale Nachweise gespeichert und/oder
- im zweiten Speicherbereich der ersten ID-Wallet auf vom Inhaber der ersten ID-Wallet als vertrauenswürdig eingestufte Akteure ausgestellte vertrauenswürdige digitalen Nachweise und/oder Nachweisketten gespeichert, wobei die vertrauenswürdigen digitalen Nachweise und/oder die Nachweisketten jeweils wenigstens einen ersten öffentlichen kryptografischen Schlüssel aufweisen.

In Ausführungsformen des Verfahrens
- verschlüsselt das auf dem ersten Hardware-Sicherheitsmoduls laufende Anwendungsprogramm mindestens einen digitalen Nachweis mit einem durch die erste ID-Wallet auf Basis eines Zufallswertes generierten symmetrischen Software-Schlüssel,
- wird der so generierte Schlüssel durch das auf dem ersten Hardware-Sicherheitsmodul laufende Anwendungsprogramm verschlüsselt, wobei ein abgeleiteter Schlüssel erzeugt wird aus
   o dem mindestens einen im ersten Identitäts-Schlüsselregister gespeicherten privaten Schlüssel,
   o dem öffentlichen Schlüssel eines in einem, auf dem zweiten Hardware-Sicherheitsmodul vorhandenen zweiten Identitäts-Schlüsselregister gespeicherten privaten Schlüssel,
   o dem mindestens ersten nicht auslesbaren geheimen symmetrischen Schlüssel des ersten Installateurs-Schlüsselregisters,
   o dem Zufallswert,
- überträgt der verschlüsselte digitale Nachweis mit dem unter Zuhilfenahme des abgeleiteten Schlüssels den symmetrischen Software-Schlüssel an das zweite Hardware-Sicherheitsmodul verschlüsselt,
- entnimmt die zweite ID-Wallet den verschlüsselten symmetrischen Software-Schlüssel zusammen mit dem Zufallswert und überträgt den verschlüsselten symmetrischen Software-Schlüssel zusammen mit dem Zufallswert an das zweite Hardware-Sicherheitsmodul,
- erzeugt das zweite Anwendungsprogramm einen symmetrischen Schlüssel, aus
   o dem mindestens einen im zweiten Identitäts-Schlüsselregister gespeicherten privaten Schlüssel,
   o dem öffentlichen Schlüssel des verwendeten, in einem, auf dem ersten Hardware-Sicherheitsmodul vorhandenen ersten Identitäts-Schlüsselregister gespeicherten privaten Schlüssel,
   o dem mindestens ersten nicht auslesbaren geheimen symmetrischen Schlüssel des ersten Installateurs-Schlüsselregisters,
   o dem Zufallswert,
- benutzt das zweite Anwendungsprogramm den so gebildeten symmetrischen Schlüssel, um den symmetrischen Software-Schlüssel zu entschlüsseln und überträgt diesen an die zweite ID-Wallet,
- entschlüsselt die zweite ID-Wallet den digitalen Nachweis mit dem symmetrischen Software-Schlüssel.

Der Zufallswert kann eine zufällig generierte Zeichenfolge sein und auch als Salt bezeichnet werden.

In Ausführungsformen des Verfahrens erzeugt die erste ID-Wallet unter Verwendung des ersten Anwendungsprogramms und der von diesem verwalteten kryptografischen Schlüssel der ersten verwendeten dezentralen Identität überprüfbare digitale Nachweise und/oder verwaltet diese, wobei die überprüfbaren digitalen Nachweise
- eine Zuordnung von öffentlichen kryptografischen Schlüsseln zu einer digitalen Identität umfassen und/oder
- eine überprüfbare Aussage der Zuordnung des DID des Ausstellers zu mindestens einem Akteur treffen.

Das Verwalten kann dabei auch das Abspeichern und/oder Löschen umfassen.

In Ausführungsformen des Verfahrens wird der erste Speicherbereich für die digitalen Nachweise für die auf den Inhaber der ersten ID-Wallet ausgestellte digitalen Nachweise mittels eines der symmetrischen kryptografischen Schlüssel durch das erste Anwendungsprogramm symmetrisch verschlüsselt.

In Ausführungsformen des Verfahrens prüft die erste ID-Wallet die Integrität solcher der vertrauenswürdigen digitalen Nachweise, die einen öffentlichen kryptografischen Schlüssel aufweisen und deren öffentlicher kryptografischer Schlüssel mit einem im vertrauenswürdigen digitalen Nachweis genannten DID in Verbindung steht, kryptografisch, wobei die vertrauenswürdigen digitalen Nachweise als überprüfbare digitale Nachweise ausgelegt sind und das System solche überprüfbare digitale Nachweise in der ersten ID-Wallet speichert.

In Ausführungsformen des Verfahrens werden im ersten Speicherbereich und/oder im zweiten Speicherbereich digitale Nachweise gespeichert, welche einen oder mehrere andere im zweiten Speicherbereich gespeicherte digitale Nachweise referenzieren.

In Ausführungsformen des Verfahrens führt das erste Hardware-Sicherheitsmodul das erste Anwendungsprogramm aus und das erste Anwendungsprogramm erzeugt das der mindestens einen SSI zugehörige, mindestens eine zu einer asymmetrischen Verschlüsslung geeignete Schlüsselpaar und/oder den mindestens einen vorrotierten Schlüssel und speichert das Schlüsselpaar und/oder den vorrotierten Schlüssel im Identitäts-Schlüsselregister des ersten Hardware-Sicherheitsmodul, wobei das Anwendungsprogramm auf dem Hardware-Sicherheitsmodul gespeicherte öffentliche kryptografische Schlüssel mittels der Schnittstelle exportiert.

In Ausführungsformen des Verfahrens ist die ID-Wallet-HSM-Kommunikationsschnittstelle als eine HSM-Anwendungsprogramm-Programmierschnittstelle ausgebildet ist und kommuniziert die erste ersten ID-Wallet mittels der HSM-Anwendungsprogramm-Programmierschnittstelle mit dem ersten Anwendungsprogramm und führt so einen Datenaustausch zwischen dem ersten Anwendungsprogramm und der ersten ID-Wallet durch.

In Ausführungsformen besteht das Register digitaler Nachweise aus einer Folge von Registereinträgen, die wahlfrei durch das Anwendungsprogramm ausgelesen werden kann. Die Anzahl ist durch die Speichergröße des HSM bestimmt. Jeder Registereintrag ist eine Typ-Länge-Wert-Struktur, auch bezeichnet als Tag-Length-Value-Struktur (TLV) und besteht aus:
- einem 256 Bit Credential-Register-Eintrags-Identifikator
- einem 64 Bit Zähler vorzeichenloser Ganzzahlen
- einem 8 Bit boolesches Feld für die Rechteverwaltung für den Inhaber
- r-Wert einer X9.62 ECDSA Signatur des Ausstellers des digitalen Nachweises
- S-Wert der X9.62 ECDSA Signatur

Dabei ist die Kennnummer des Credential-Register-Eintrags (CRE-ID) 32 Byte lang. Die ID wird aus der Signatur des dazugehörigen digitalen Nachweises erzeugt. Um eine einheitliche Länge bei unterschiedlichen Signaturverfahren zu erzeugen wird diese Signatur mit SHA 256 gehasht und als BER OCTET STRING abgelegt. Die Rechteverwaltung des Credentials erfolgt über ein 8-Bit großes boolsches Feld. Die einzelnen Bits werden wie folgt genutzt:
- 0b00000001 kopierbar; das Credential kann vervielfältigt werden
- 0b00000010 verleihbar; das Credential kann verliehen werden; Statusbit "*verliehen*" muss zusätzlich geprüft werden
- 0b00000100 transferierbar; das Credential kann an ein anderes HSM transferiert (gespeichert) werden
- 0b01000000 verliehen (Statusbit)
- 0b10000000 invalide/zur Löschung vorgemerkt (Statusbit)

Die Signatur des Credential-Register-Eintrags wird im HSM des Ausstellers mit dem gleichen privaten Schlüssel erstellt, der auch bei der Signierung des dazugehörigen digitalen Nachweises verwendet wird.

Bei der Präsentation eines Verifiable Credentials als digitales Original unter Verwendung zweier auf dem HSM laufender Anwendungsprogramme erbringt das auf dem HSM des Credential-Inhabers laufende Anwendungsprogramm in Ausführungsformen des Verfahrens durch verschlüsselte Übertragung des Credential-Register-Eintrags dem HSM des Credential-Prüfers den Nachweis über die aktuelle Inhaberschaft des Credentials. Der folgende Ablauf zwischen einem Credential-Inhaber (A) und einem Credential-Prüfer (B) wird dabei durchlaufen:
1.1 (A) sendet eine Einladungsnachricht (z.B. DIDComm-Invitation) und überträgt in dieser ein DID-Dokument mit dem eigenem Public Key (PUK). Alternativ kann auch (B) die Einladungsnachricht senden. In diesem Fall sendet (B) den Present-Proof-Request nachdem (A) die Antwort auf die Einladung gesendet hat.
1.2 (A) empfängt die Antwort auf die Einladung zusammen mit dem Present-Proof-Request. Darin enthalten ist das DID-Document von (B) mit dem Public Key von B sowie einem Zufallswert als *Salt* als Initialvektor für die Generierung eines Sitzungs-Schlüssels.
1.3.1 Dieser wird durch das auf dem HSM von (A) laufende Anwendungsprogramm zu generieren beauftragt, indem die Parameter eigene DID von (A), um die eigene zu verwendende DID zu referenzieren, die DID von (B), der PUK der DID von (B) und eine Referenz des zu verwenden Kryptografie-Algorithmus übertragen werden.
1.3.2 Das auf dem HSM von (A) laufende Anwendungsprogramm erzeugt daraus den abgeleiteten Schlüssel (der). Der abgeleitete Schlüssel wird erzeugt aus dem Private Key der referenzierten DID von (A), dem PUK der DID von (B) und dem ersten Installateursschlüssel (Installateur.symKey). und hält diesen in der Sitzung (nur DIDs und Salt werden übertragen. Das auf dem HSM laufende Anwendungsprogramm bestätigt die Schlüssel-Generierung (ack).
1.4 Die ID-Wallet von A generiert aus dem übertragenen Salt den symmetrischen Software-Schlüssel (*ssk*) für die Nachrichten-Verschlüsselung
1.5.1 Die ID-Wallet von A lässt durch das auf dem HSM von A laufende Anwendungsprogramm den *ssk* mit abgeleitetem Schlüssels *(der)* verschlüsseln → enc(*der;ssk*)
1.5.2 Die ID-Wallet von A empfängt den verschlüsselten symmetrischen Software-Schlüssel enc(*der;ssk*)
für jedes zu präsentierende Credential wird folgende Sequenz durchlaufen:
1.6.1 Die ID-Wallet von A sendet an das auf dem HSM von A laufende Anwendungsprogramm einen Auftrag zum Nachweis der Inhaberschaft des Credentials,
1.6.1.1 das Anwendungsprogramm lädt den Credential-Register-Eintrag (CRE) aus dem Credential-Register
1.6.1.2 das Anwendungsprogramm empfängt den CRE vom Credential-Register,
1.6.2 das Anwendungsprogramm verschlüsselt den CRE mit dem abgeleiteten Schlüssels *der,*
1.6.3 Die ID-Wallet erzeugt aus dem vom Anwendungsprogramm erhaltenen, verschlüsselt den Credential-Eintrag eine Nachricht (z.B. DIDComm-PresentProof) zur Präsentation des Credentials, lässt diesen vom Anwendungsprogramm unter Verwendung des privaten Schlüssel der verwendeten DID von A signieren und
1.7 verschlüsselt die Nachricht mit dem ssk (enc(der ssk)) . Jede Nachricht hat einen eigenen Schlüssel.
1.8 Die ID-Wallet von A überträgt die verschlüsselte Nachricht zur Präsentation an die ID-Wallet von B.
2.1.1 Die ID-Wallet von B sendet einen Auftrag zur Schlüsselableitung des abgeleiteten Schlüssels an das auf dem HSM laufende Anwendungsprogramm 200a.
2.1.2 In dem, auf dem HSM 50a von B (des Prüfers) laufenden Anwendungsprogramm erfolgt die Schlüsselableitung des abgeleiteten Schlüssels *(der).* Dies erfolgt analog zum Schritt wie 1.3.2, nur dass der PUK von DID (A) und der Private Key von DID (B) verwendet werden.
2.2 Die ID-Wallet von B lädt den PUK der DID von A
2.3 Die ID-Wallet von B prüft die Signatur von A über die Präsentation
für jedes präsentierte Credential wird folgende Sequenz durchlaufen:
2.4.1 Laden der Issuer Credential Kette aus der Präsentation. Das Issuer-Credential wird vom präsentierten Credential referenziert und dokumentiert die DID und die Legitimation des Ausstellers. Durch die Struktur der Aussteller-Organisation und die Dokumentation von Schlüsselrotationen können mehrere Credentials einander sequenziell referenzieren und eine Kette bilden.
2.4.2 Issuer Credential Kette prüfen:
   1. Prüfen der kryptografische Konsistenz der Kette
   2. Prüfen des Vorhandenseins einer DID der Kette im Speicherbereich für vertrauenswürdige digitale Nachweise der ID-Wallet von B - hierdurch wird die Vertrauenswürdigkeit des Ausstellers ermittelt.
2.4.3 PUK des Ausstellers (PUK.issuer) aus der am Credential anhängenden Issuer Credential Kette laden
2.4.4 Signaturprüfung des präsentierten Credentials unter Verwendung des PUK.issuer
2.4.5.1 den verschlüsselten CRE des Credentials aus der Präsentation entnehmen und an das auf dem HSM laufende Anwendungsprogramm übergeben
2.4.5.2 im HSM von B wird der CRE des Credentials mit dem abgeleiteten Schlüssel *(der)* entschlüsselt ((*der*) siehe 2.1.2)
2.4.5.3 Das Anwendungsprogramm 200a prüft die Verkettung des CRE mit dem Credential (Hash(Sig(Cred)) = ID.RegEntry + proof(PUK.issuer;Sig(RegEntry))=true), wobei
   1. Sig(RegEntry) = s-Wert der Signatur
   2. r-Wert(random) = salt
   3. Zähler = max present counter
   4. X9.62 ECDSA Wert der Signatur = Container des r- und s-Wertes
2.4.5.4 Das Anwendungsprogramm wertet das übertragene Boolean Field aus
2.4.5.5 Das Anwendungsprogramm übergibt das Gesamtergebnisses der Prüfungen an die ID-Wallet von B
3 Antwort der ID-Wallet von B an die ID-Wallet von A

Ein DID-Dokument ist ein Datensatz, der den DID beschreibt, einschließlich Mechanismen wie kryptografische öffentliche Schlüssel, die der DID verwenden kann, um sich selbst zu authentifizieren und seine Verbindung mit dem DID nachzuweisen.

Ein weiterer Aspekt der Erfindung betrifft eine Verwendung eines Systems zum sicheren Austausch digitaler Nachweise zwischen zwei Akteuren eines gemeinsamen digitalen ID-Ökosystems und/oder eines Verfahrens zur sicheren Kommunikation zwischen zwei solcher Systeme nach Anspruch 14. Das System eignet sich insbesondere zur Überprüfung und/oder Übertragung von digitalen Nachweisen, insbesondere von überprüfbaren digitalen Nachweisen, wobei die erste ID-Wallet mit dem ersten Hardware-Sicherheitsmodul in Verbindung steht und die zweite ID-Wallet mit dem zweiten Hardware-Sicherheitsmodul in Verbindung steht, zur Ausstellung und/oder Präsentation und/oder Überprüfung von digitalen Nachweisen, wie Tickets, Urkunden, Wertmarken, Zugangsberechtigungen und/oder Schuldscheinen, sowie als digitale Währung, wie z.B. digitalem Zentralbankgeld (Central Bank Digital Currency, CBDC).

Ein weiterer Aspekt der Erfindung betrifft eine Computerprogrammprodukt, welches das erfindungsgemäße Verfahren implementiert und ggf. die oben genannten Anwendungen. Dieses Computerprogrammprodukt ist ggf. Bestandteil des erfindungsgemäßen Systems. Ein weiterer Aspekt ist ein Datenträger oder eine Datenverarbeitungsanlage auf der das Computerprogrammprodukt gespeichert und/oder installiert ist.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

In Ausführungsformen ist das erste HSM und/oder das zweite HSM
- eine Chipkarte, ausgewählt aus den Typen acs ACOSJ-DI 95K und/oder Javacard 3.0.4 und aufwärts und/oder
- eine eSIM, ausgewählt aus den Typen NXP EdgeLock SE050 und/oder Javacard 3.0.5 und/oder
- ein USB-C Dongle vom Typ acs ACR39T
- ein USB-A Dongle, ausgewählt aus einer Chipkarten im ID-000-Format vom Typ identiv uTrust-Token Standard und/oder einer Chipkarten im ID-1-Format vom Typ acs ACR39U
- ein Bluetooth-Dongle aufweisend eine Chipkarte im ID-000-Format vom Typ AirID 2 mini In Ausführungsformen ist das erste digitale Endgerät und/oder das zweite digitale Endgerät ein Smartphone, ausgewählt aus den Typen ein Samsung Galaxy A53 und/oder iPhone 14 PRO. Zweckmäßig sind dabei alle im der vorvorherigen Absatz genannten HSM
- untereinander im Sinne der Erfindung kompatibel, sofern das erfindungsgemäße Anwendungsprogramm auf ihnen installiert ist und
- mit den im vorherigen Absatz genannten Smartphones kompatibel, sofern das erfindungsgemäße ID-Wallet auf ihnen installiert ist.

Zweckmäßig sind dabei auch die im vorvorherigen Absatz genannten Smartphones untereinander kompatibel, sofern das erfindungsgemäße ID-Wallet auf ihnen installiert ist.

### Ausführungsbeispiele

Nachfolgend soll die Erfindung anhand eines Ausführungsbeispiels eingehender erläutert werden. Das Ausführungsbeispiel bezieht sich auf die Präsentation eines Besitznachweises eines Verifiable Credential durch eine Partei A gegenüber einer Partei B und soll dabei die Erfindung beschreiben ohne diese zu beschränken.

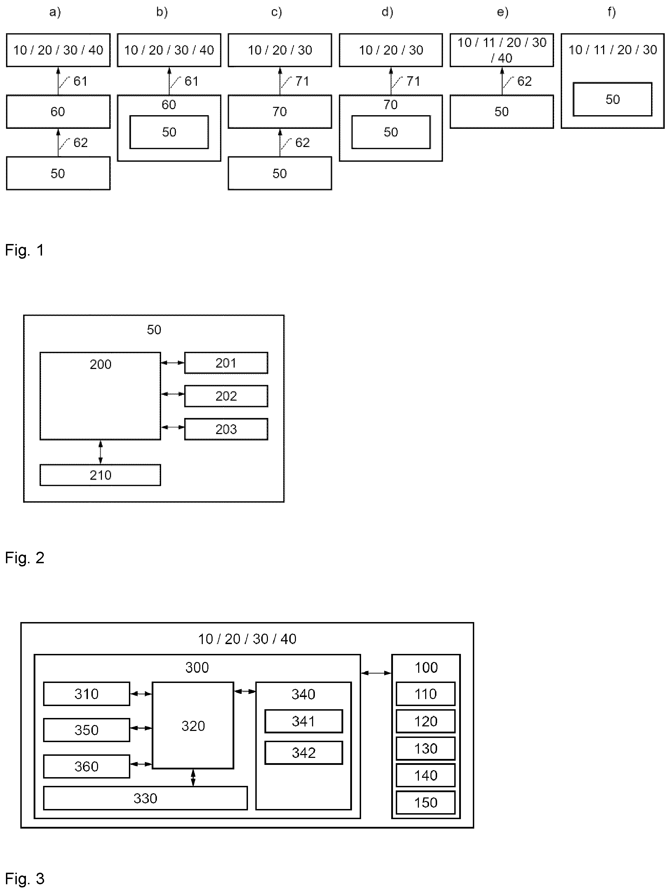

Anhand von Zeichnungen wird die Erfindung näher erläutert. Dabei zeigen
**Fig. 1** eine schematische Darstellung verschiedener Kombinationen von HSM (50), Endgeräten 10 / 20 / 30 / 40 und Verbindungen zwischen HSM und Endgeräten, wobei
   a) ein HSM (50) zeigt, welches mittels einer ISO 7816-3 Verbindung 62 mit einem USB-Chipkartenlesegerät 60 verbunden ist, welches mittels einer USB-Verbindung 61 mit einem digitalen Endgerät verbunden ist,
   b) ein HSM 50 zeigt, welches in einem USB-Chipkartenlesegerät 60 integriert ist, welches mittels einer USB-Verbindung 62 mit einem digitalen Endgerät verbunden ist,
   c) ein HSM 50 zeigt, welches mittels einer ISO 7816-3 Verbindung 62 mit einem Bluetooth-Chipkartenlesegerät 70 verbunden ist, welches mittels einer Bluetooth - Verbindung 71 mit einem digitalen Endgerät verbunden ist
   d) ein HSM 50 zeigt, welches in einem Bluetooth-Chipkartenlesegerät 70 integriert ist, welches mittels einer Bluetooth-Verbindung 71 mit einem digitalen Endgerät verbunden ist,
   e) ein HSM 50 zeigt, welches mittels einer ISO 7816-3 Verbindung 62 mit einem digitalen Endgerät verbunden ist
   f) ein HSM 50 zeigt, welches in einem digitalen Endgerät integriert ist,
**Fig**. **2** eine schematische Darstellung eines HSM 50, wobei das HSM das auf dem HSM laufendes Anwendungsprogramm 200 aufweist, welches mit dem Installateurs-Schlüsselregister 201, mit dem Identitäts-Schlüsselregister 202, dem Register digitaler Nachweise 203 und der Anwendungsprogramm-HSM-Schnittstelle 210 verbunden ist,
**Fig. 3** eine schematische Darstellung eines digitalen Endgerätes 10 / 20 / 30 / 40, welches eine ID-Wallet 300 aufweist, wobei die ID-Wallet eine Geschäftsprozesslogik 320 aufwiest, die Geschäftsprozesslogik mit Nutzeroberfläche der ID-Wallet 310, dem Credential Store 350, dem Trusted Credential Store 360, der HSM-Anwendungsprogramm-Programmier-Schnittstelle 330 und der ID-Wallet-zu-ID-Wallet-Kommunikationsschnittstelle 340 verbunden ist, wobei die Kommunikationsschnittstelle eine DIDComm-Schnittstelle 341 und eine OpenlD4VC-Schnittstelle 342 aufweist und die ID-Wallet mit einer Datentransportschnittstelle (100) verbunden ist, die eine TCP/IP-Verbindung 110, eine Nearby-Share-Verbindung 120, eine Wi-Fi Direct-Verbindung 130, eine AirDrop-Verbindung 140 und eine Bluetooth-Verbindung 150 aufweist,

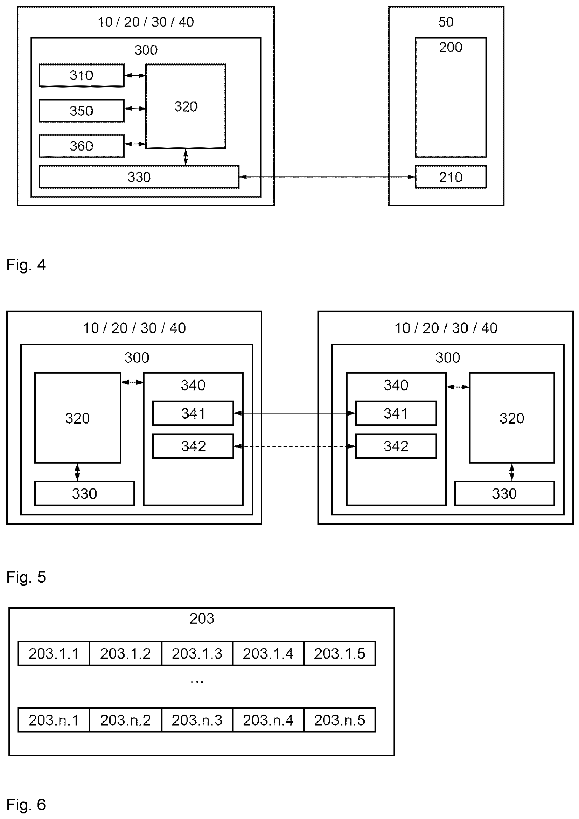

**Fig. 4** eine schematische Darstellung eines digitalen Endgerätes, welches eine ID-Wallet 300 aufweist, wobei die ID-Wallet eine Geschäftsprozesslogik 320 aufwiest, die Geschäftsprozesslogik mit Nutzeroberfläche der ID-Wallet 310, dem Credential Store 350, dem Trusted Credential Store 360 und der HSM-Anwendungsprogramm-Programmier-Schnittstelle 330 verbunden ist und die HSM-Anwendungsprogramm-Programmier-Schnittstelle mittels einer Anwendungsprogramm-HSM-Schnittstelle 210 mit einem außerhalb des Endgerätes befindlichen HSM 50 verbunden ist und das HSM ein Anwendungsprogramm 200 aufweist,
**Fig**. **5** zwei mobile Endgeräte, die jeweils eine ID-Wallet 300 aufweisen, wobei die jeweilige ID-Wallet jeweils eine Geschäftsprozesslogik 320 aufwiest, die Geschäftsprozesslogik 320 mit, der HSM-Anwendungsprogramm-Programmierschnittstelle der ID-Wallet 330 und der ID-Wallet-zu-ID-Wallet-Kommunikationsschnittstelle 340 verbunden ist, wobei die Kommunikationsschnittstelle eine DIDComm-Schnittstelle 341 und eine OpenID4VC-Schnittstelle 342 aufweist und die beiden Endgeräte jeweils mittels der ID-Wallet-zu-ID-Wallet-Kommunikationsschnittstelle 340 miteinander verbunden sind,
**Fig. 6** ein Register digitaler Nachweise 203, welches zwei Registereinträge 203.1 und 203.n aufweist, die jeweils eine Tag-Length-Value-Struktur aufweisen, und die jeweils aus einer ersten Credential Registry ID 203.x.1 bestehen, einen Zähler 203.x.2, einem Boolesches Feld 203.x.3, einer X9.62 ECDSA Signatur: r-Wert des Signatur 203.x.4 und einem X9.62 ECDSA Signatur: S-Wert des Signatur 203.x.5 bestehen

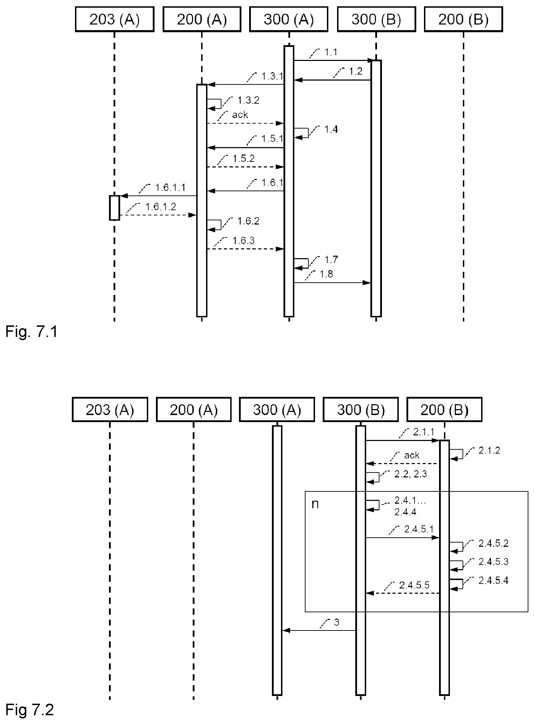

**Fig. 7****.****1** einen ersten Teil einer Präsentation eines im Credential-Register 203 (A) verankerten Credentials einer Partei A gegenüber einer Partei B mit dem folgenden Ablauf (ausgeführt als UML-Sequenz-Diagramm)
   1.1 (A) sendet eine DIDComm-Einladung und überträgt in dieser ein DID-Dokument mit dem eigenem Public Key (PUK). Alternativ kann auch (B) die DIDComm-Invitation senden. In diesem Fall sendet (B) den Present-Proof-Request nachdem (A) die Antwort auf die DIDComm-Einladung gesendet hat.
   1.2 (A) empfängt die Antwort auf die DIDComm- Einladung zusammen mit dem Present-Proof-Request. Darin enthalten ist das DID-Document von (B) mit dem Public Key von B sowie einem Zufallswert als *Salt* als Initialvektor für die Generierung eiens Sitzungs-Schlüssels.
   1.3.1 Dieser wird durch das auf dem HSM von (A) laufende Anwendungsprogramm aus zu generieren beauftragt indem die Parameter eigene DID von (A), um die eigene zu verwendende DID zu referenzieren, DID von (B), PUK der DID von (B), Referenz des zu verwenden Kryptografie-Algorithmus übertragen.
   1.3.2 Das auf dem HSM von (A) laufende Anwendungsprogrammerzeugt daraus den abgeleiteten Schlüssel *(der).* Der abgeleitete Schlüssel wird erzeugt aus dem Private Key der referenzierten DID von (A), dem PUK der DID von (B) und dem ersten Installateurschlüssel (Installateur.symKey). und hält diesen in der Sitzung (nur DIDs und Salt werden übertragen. Das auf dem HSM laufende Anwendungsprogramm bestätigt die Schlüssel-Generierung (ack).
   1.4 (A) generiert aus dem übertragenen Salt den symmetrischen Software-Schlüssel (ssk) für DIDComm-Nachrichten-Verschlüsselung
   *1.5.1 ssk* von auf dem HSM laufende Anwendungsprogramm mit abgeleitetem Schlüssels *(der)* verschlüsseln lassen → enc(*der*;*ssk*)
   1.5.2 Empfang des verschlüsselten symmetrischen Software-Schlüssel enc(*der*;*ssk*)
   für jedes zu präsentierende Credential wird folgende Sequenz durchlaufen:
   1.6.1 senden eines Auftrags zum Nachweis der Inhaberschaft des Credentials an das auf dem HSM laufende Anwendungsprogramm
   1.6.1.1 laden des Credentials aus dem Credential-Register
   1.6.1.2 empfangen des Credentials vom Credential-Register
   1.6.2 verschlüsseln des Credentials mit dem abgeleiteten Schlüssels *(der)*
   1.6.3 erzeugen der DIDComm-Nachricht (PresentProof) und
   1.7 enc(*der;ssk*) in DIDComm übertragen (jede Nachricht hat eigenen Schlüssel)
   1.8 Präsentation übertragen,
Fig. 7.2 einen zweiten Teil, der Prüfung einer Präsentation eines im Credential-Register 203 (A) verankerten Credentials einer Partei A gegenüber einer Partei B durch die Partei B mit dem folgenden Ablauf (ausgeführt als UML-Sequenz-Diagramm)
   2.1.1 Auftrag zur Schlüsselableitung des abgeleiteten Schlüssels an das auf dem HSM laufende Anwendungsprogramm senden
   2.1.2 Schlüsselableitung des abgeleiteten Schlüssels *der* im auf dem HSM laufenden Anwendungsprogramm des Prüfers. Dies erfolgt analog zum Schritt wie 1.3.2, nur dass der PUK von DID (A) und der Private Key von DID (B) verwendet werden.
   2.2 PUK des Holders laden
   2.3 Signatur des Holders über die Presentation prüfen.
   Für jedes präsentierte Credential wird folgende Sequenz durchlaufen:
   2.4.1 Laden der Issuer Credential Kette aus der Presentation. Das Issuer-Credential wird vom präsentierten Credential referenziert und dokumentiert DID und Legitimation des Ausstellers. Durch die Struktur der Aussteller-Organisation und die Dokumentation von Schlüsselrotationen können mehrere Credentials einander sequenziell referenzieren und eine Kette bilden.
   2.4.2 Issuer Credential Kette prüfen:
      1. kryptografische Konsistenz der Kette
      2. Vorhandensein einer DID der Kette im eigenen Speicherbereich für vertrauenswürdige digitale Nachweise - hierdurch wird die Vertrauenswürdigkeit des Ausstellers ermittelt.
   2.4.3 PUK des Ausstellers (PUK.issuer) aus der am Credential anhängenden Issuer Credential Kette laden
   2.4.4 Signaturprüfung des präsentierten Credentials
   2.4.5.1 verschlüsselten RegEntry des Credentials aus Presentation entnehmen und an das eigene auf dem HSM laufende Anwendungsprogramm übergeben
   2.4.5.2 im ASM CRE des Credentials mit *der* entschlüsseln (*der* siehe 2.1.2)
   2.4.5.3 Prüfen der Verkettung des Credential mit dem Credential (Hash(Sig(Cred)) = ID.RegEntry + proof(PUK.issuer;Sig(RegEntry))=true), wobei
      1. Sig(RegEntry) = s-Wert der Signatur
      2. r-Wert(random) = salt
      3. Zähler = max present counter
      4. X9.62 ECDSA Wert der Signatur = Container des r- und s-Wertes
   2.4.5.4 Auswertung des übertragenen Boolean Field (203.x.3)
   2.4.5.5 Rückgabe des Gesamtergebnisses der Prüfungen an die ID-Wallet (B)
   3 Antwort der ID-Wallet (B) an die ID-Wallet (A).

Ein Ausführungsbeispiel eines erfindungsgemäßen Systems weist sechs Kategorien von möglichen, nicht kopierbaren überprüfbaren Nachweisen auf:

| nicht kopierbares Verifiable Credential | weitergebbar | nicht weitergebbar |
|---|---|---|
| Aussteller-gebunden | Aussteller-DID im Header des VC, Signatur-gesichert, Flag im Register-Eintrag im Register für digitale Nachweise 203 auf "weitergebbar" | Aussteller-DID im Header des VC, Signatur-gesichert, Flag im Register-Eintrag im Register für digitale Nachweise 203 auf "nicht weitergebbar" |
| | z.B. nicht Namensgebundene Aktie, Barscheck, digitaler Geldschein oder Konzertticket | z.B. Gruppen-Zugangsberechtigung zu Gebäuden |
| Inhaber-gebunden | Inhaber-DID im Header des VC, Signatur-gesichert, Flag im Register-Eintrag im Register für digitale Nachweise 203 auf "weitergebbar" | Inhaber-DID im Header des VC, Signatur-gesichert, Flag im Register-Eintrag im Register für digitale Nachweise 203 auf "nicht weitergebbar" |
| | z.B. ausgefüllter Stimmzettel, vom anonymen Wähler auf Wahllokal ausgestellt | z.B. inhabergebundener Zugangstoken zu einem Schließfach |
| Aussteller+Inhaber-gebunden | Aussteller-DID und Inhaber-DID im Header des VC, Signatur-gesichert, Flag im Register-Eintrag im Register für digitale Nachweise 203 auf "weitergebbar" | Aussteller-DID und Inhaber-DID im Header des VC, Signatur-gesichert, Flag im Register-Eintrag im Register für digitale Nachweise 203 auf "nicht weitergebbar" |
| | z.B. Führerschein oder Vollmacht mit Recht zur Untervollmacht, bspw. Vorsorgevollmacht oder Abholberechtigung vom Kindergarten | z.B. ÖPNV-Monatskarte, Delegation Credential oder EM-Tickets |

Ein Ausführungsbeispiel eines Systems zum sicheren Austausch digitaler Nachweise zwischen zwei Akteuren eines gemeinsamen digitalen ID-Ökosystems, weist:
- eine erste acs ACOSJ-DI 95K-Chipkarte 50
- eine erste ID-Wallet 300
- ein erstes Samsung Galaxy A53-Smartphone (10), wobei das erste acs ACOSJ-DI 95K-Chipkarte 50 mittels einer DIDComm-Schnittstelle 341 mittels des ersten Samsung Galaxy A53-Smartphone 10 mit der ersten ID-Wallet 30) verbunden ist,
- ein erstes auf der ersten acs ACOSJ-DI 95K-Chipkarte 50 gespeichertes Applet 200, das dazu ausgebildet ist, eine Kommunikation zwischen dem ersten acs ACOSJ-DI 95K-Chipkarte 50 und dem ersten Samsung Galaxy A53-Smartphone herzustellen, zu steuern und zu verwalten, sowie Rechenoperationen auf der ersten acs ACOSJ-DI 95K-Chipkarte 50 auszuführen,
   wobei
- die erste acs ACOSJ-DI 95K 50 ein Installateurs-Schlüsselregister 201 zur Speicherung von vier kryptografischen Schlüssel, zur symmetrisch verschlüsselten Kommunikation zwischen dem ersten Hardware-Sicherheitsmodul 50, mittels der ersten ID-Wallet 300 und mindestens einem zweiten, mit mindestens einer zur Kommunikation mit der ersten ID-Wallet 300 geeigneten zweiten ID-Wallet 300 verbundenen zweiten Hardware-Sicherheitsmodul 50a übertragbarer Information ausgebildeten Schlüsseln aufweist,
- das erste Hardware-Sicherheitsmodul 50 ein Identitäts-Schlüsselregister 202 zur Hinterlegung von einem privaten Schlüssel aufweist,
- die erste acs ACOSJ-DI 95K- Chipkarte 50 ein Register 203 digitaler Nachweise aufweist, wobei das Register 203 digitaler Nachweise dazu geeignet ist, Registereinträge digitaler Nachweise zu enthalten, wobei die Registereinträge Bezeichnungen von digitalen Nachweisen sowie Hashwerte dieser digitalen Nachweise, Informationen über einen Aussteller, Signaturen und Zustände dieser digitalen Nachweise zu umfassen,
- die erste acs ACOSJ-DI 95K- Chipkarte 50 dazu eingerichtet ist,
   o kryptografische Rechenoperationen durchzuführen,
   o mittels des ersten Applets 200 eine selbstbestimmte Identität (SSI) und mindestens ein zur SSI gehöriges, zu einer asymmetrischen Verschlüsslung geeignetes Schlüsselpaar zu erzeugen, abzuspeichern, zu löschen und zu verwalten, wobei das geeignete Schlüsselpaar einen privaten und einen öffentlichen Schlüssel umfasst,
   o einen als dezentralisierten Identifikator (DID) definierter berechneter Hashwert des öffentlichen Schlüssels der SSI, in der ID-Wallet 300 zu verwalten,
- die erste acs ACOSJ-DI 95K 50
   ∘ jegliche Übertragung privater Schlüssel aus dem Identitäts-Schlüsselregister 202 der ersten acs ACOSJ-DI 95K 50 heraus oder in diesen hinein verhindert und
   o Übertragungen öffentlicher Schlüssel mittels der ID-Wallet-zu-ID-Wallet-Kommunikationsschnittstelle 340 ermöglicht.

Ein Ausführungsbeispiel eines Verfahrens zur sicheren Kommunikation zwischen zwei Systemen zur Überprüfung und Übertragung von digitalen Nachweisen, insbesondere von überprüfbaren digitalen Nachweisen, dadurch gekennzeichnet, dass die erste ID-Wallet 300 mit der ersten Hardware- acs ACOSJ-DI 95K- Chipkarte 50 in Verbindung steht und die zweite ID-Wallet 300a mit der zweiten acs ACOSJ-DI 95K- Chipkarte 5) in Verbindung steht, wobei das Applet 200 des ersten acs ACOSJ-DI 95K 50
- Mindestens einen kryptografischen Schlüssel erzeugt und verwaltet, wobei der Schlüssel dazu dient, mindestens einen überprüfbaren digitalen Nachweis in der ersten ID-Wallet 300 zu ver- und entschlüsseln und zu signieren und zu prüfen
- eine sichere Kommunikation mittels asymmetrischer Kryptographie, aufbaut wobei die Verschlüsselung durch die erste acs ACOSJ-DI 95K- Chipkarte 50 erfolgt und jede acs ACOSJ-DI 95K 50 jegliche Übertragung privater Schlüssel aus dem Schlüsselregister heraus oder in dieses hinein verhindert und
- verhindert, dass das Applet 200 der ersten acs ACOSJ-DI 95K- Chipkarte 50 sich selbst Inhalte in sein eigenes Register 203 digitaler Nachweise schreibt.

### Bezugszeichen

- 10: Mobile Recheneinheit Mobiltelefon/Smartphone/Tablet
- 11: Mobile bedienerlose Recheneinheit (Internet-of-Things-Device)
- 20: Mobile Recheneinheit PC
- 30: Stationäre Menschen-bediente Recheneinheit
- 40: Stationäre Recheneinheit zur automatisierten Datenverarbeitung
- 50: Erstes Hardware-Sicherheitsmodul (HSM)
- 50a: Zweites Hardware-Sicherheitsmodul (HSM)
- 60: USB-Chipkartenlesegerät
- 61: USB-Verbindung
- 62: ISO 7816-3 Verbindung
- 70: Bluetooth-Chipkartenlesegerät
- 71: Bluetooth-Verbindung
- 100: Datentransportschnittstelle
- 110: TCP/IP-Verbindung
- 120: Nearby-Share-Verbindung
- 130: Wi-Fi Direct
- 140: AirDrop-Verbindung
- 150: Bluetooth
- 200: Erstes Anwendungsprogramm / Auf erstem HSM installiertes Applet
- 200a: Zweites Anwendungsprogramm / Auf zweitem HSM installiertes Applet
- 201: Installateurs-Schlüsselregister des ersten HSM
- 201a: Installateurs-Schlüsselregister des zweiten HSM
- 202: Identitäts-Schlüsselregister des ersten HSM
- 202a: Identitäts-Schlüsselregister des zweiten HSM
- 203: Register digitaler Nachweise
- 203.x.1: Credential Registry ID
- 203.x.2: Zähler
- 203.x.3: Boolesches Feld
- 203.x.4: X9.62 ECDSA Signatur: r-Wert der Signatur
- 203.x.5: X9.62 ECDSA Signatur: S- Wert der Signatur
- 210: Anwendungsprogramm-HSM-Schnittstelle
- 300: Erste ID-Wallet
- 300a: Zweite ID-Wallet
- 310: Nutzeroberfläche der ID-Wallet
- 320: Geschäftsprozesslogik der ID-Wallet
- 330: ID-Wallet-zu-HSM-Kommunikationsschnittstelle / HSM-Anwendungsprogramm-Programmierschnittstelle der ID-Wallet
- 340: Erste ID-Wallet-zu ID-Wallet-Kommunikationsschnittstelle
- 340a: Zweite ID-Wallet-zu ID-Wallet-Kommunikationsschnittstelle
- 341: DIDComm-Schnittstelle
- 342: OpenlD4VC-Schnittstelle
- 350: Speicherbereich digitaler Nachweise
- 360: Speicherbereich vertrauenswürdiger digitaler Nachweise

## Patentansprüche

1. System zur sicheren Ausstellung, zum sicheren Empfang, zur sicheren Präsentierung und zur sicheren Überprüfung digitaler Nachweise zwischen zwei Akteuren eines gemeinsamen digitalen ID-Ökosystems, mindestens aufweisend:
- mindestens ein erstes Hardware-Sicherheitsmodul (50), welches so konstruiert ist, dass dessen Funktionen nur durch Nutzung einer Anwendungsprogramm-HSM-Schnittstelle (210) eines ersten Anwendungsprogramms (200) steuerbar sind und das erste Anwendungsprogramm (200) dazu konfiguriert ist, Register (201, 202, 203) zu verwalten, wobei die Register (201, 202, 203) jeweils als mindestens ein Installateurs-Schlüsselregister (201) zur Speicherung von mindestens einem kryptografischen Schlüssel, mindestens ein Identitäts-Schlüsselregister (202) zur Hinterlegung von mindestens einem privaten Schlüssel und mindestens ein Register (203) digitaler Nachweise ausgelegt sind,
- mindestens eine erste ID-Wallet (300), aufweisend mindestens eine zur Kommunikation mit mindestens einer zweiten ID-Wallet (300a) geeigneten ID-Wallet-zu-ID-Wallet-Kommunikationsschnittstelle (340),
- mindestens ein erstes digitales Endgerät (10 oder 11 oder 20 oder 30 oder 40), auf dem die erste ID-Wallet (300) installiert ist, wobei die erste ID-Wallet (300) mittels einer ID-Wallet-zu-HSM-Kommunikationsschnittstelle (330) mit dem ersten Hardware-Sicherheitsmodul (50) verbunden ist und dazu ausgelegt ist, unter Verwendung der Anwendungsprogramm-HSM-Schnittstelle (210) mit dem ersten Anwendungsprogramm (200) zu kommunizieren,
- mindestens ein erstes auf dem ersten Hardware-Sicherheitsmodul (50) gespeichertes Anwendungsprogramm (200), das dazu ausgebildet ist, eine Kommunikation zwischen dem ersten Hardware-Sicherheitsmodul (50) und dem ersten digitalen Endgerät (10) herzustellen, zu steuern und zu verwalten, sowie Rechenoperationen auf dem ersten Hardware-Sicherheitsmodul (50) auszuführen,
wobei
- das erste Hardware-Sicherheitsmodul (50), das mindestens eine Identitäts-Schlüsselregister (202) und das mindestens eine Installateurs-Schlüsselregister (201) zur Speicherung von mindestens einem kryptografischen Schlüssel aufweist und der im Installateurs-Schlüsselregister (201) gespeicherte kryptografischen Schlüssel so konfiguriert ist, dass er eine symmetrisch verschlüsselte Kommunikation zwischen dem ersten, auf dem ersten Hardware-Sicherheitsmodul (50) gespeicherten, Anwendungsprogramm (200) und einem zweiten, auf einem zweiten Hardware-Sicherheitsmodul (50a) gespeicherten, Anwendungsprogramm (200a), mittels der ersten ID-Wallet (300) und einer zweiten ID-Wallet (300a), die mit mindestens der zur Kommunikation mit der ersten ID-Wallet (300) geeigneten ID-Wallet-zu ID-Wallet-Kommunikationsschnittstelle (340a) ausgestattet ist, ermöglicht,
- das erste Hardware-Sicherheitsmodul (50) das mindestens eine Identitäts-Schlüsselregister (202) zur Hinterlegung von mindestens einem privaten Schlüssel aufweist,
- das erste Hardware-Sicherheitsmodul (50) das mindestens eine Register (203) digitaler Nachweise aufweist, wobei das Register (203) digitaler Nachweise konfiguriert ist, um Registereinträge digitaler Nachweise zu enthalten, wobei die Registereinträge Bezeichnungen von digitalen Nachweisen sowie Hashwerte dieser digitalen Nachweise, Informationen über einen Aussteller, Signaturen und Zustände dieser digitalen Nachweise umfassen,
- das erste Hardware-Sicherheitsmodul (50) dazu eingerichtet ist,
o kryptografische Rechenoperationen durchzuführen,
o mittels des ersten Anwendungsprogramms (200) mindestens eine selbstbestimmte Identität, SSI, und mindestens ein zur SSI gehöriges, zu einer asymmetrischen Verschlüsslung geeignetes Schlüsselpaar und/oder mindestens einen vorrotierten Schlüssel zu erzeugen, abzuspeichern, zu löschen, zu verwalten und/oder im Identitäts-Schlüsselregister (202) des ersten Hardware-Sicherheitsmoduls (200) zu speichern, wobei das geeignete Schlüsselpaar einen privaten und einen öffentlichen Schlüssel umfasst,
o mindestens einen, als dezentralisierten Identifikator, DID, definierten, berechneten Hashwert des öffentlichen Schlüssels der SSI, in der ID-Wallet (300) zu verwalten,
- das erste Hardware-Sicherheitsmodul (50)
o jegliche Übertragung privater Schlüssel aus dem Identitäts-Schlüsselregister (202) des ersten Hardware-Sicherheitsmodul (50) heraus oder in diesen hinein verhindert und
o Übertragungen öffentlicher Schlüssel mittels der Anwendungsprogramm-HSM-Schnittstelle (210) ermöglicht
- das erste Anwendungsprogramm (200) konfiguriert ist, um vorrotierte Schlüssel zu erzeugen und in dem Identitäts-Schlüsselregister (202) des Hardware-Sicherheitsmodul (50) zu speichern, wobei das Hardware-Sicherheitsmodul (50) die Anwendungsprogramm-HSM-Schnittstelle (210) aufweist, die dazu ausgelegt ist, öffentliche kryptografische Schlüssel zu exportieren, wobei das Register (203) digitaler Nachweise Signaturen, mindestens einen DID eines Austellers und Zustandsparameter der im Speicherbereich (350) für digitale Nachweise registrierten digitalen Nachweise aufweist.

2. System nach Anspruch 1, **dadurch gekennzeichnet, dass** die erste ID-Wallet (300) wenigstens einen Speicher aufweist, der dazu geeignet ist, verschlüsselte digitale Nachweise zu enthalten, wobei Schlüssel zur Verschlüsselung der digitalen Nachweise im Hardware-Sicherheitsmodul (50) gespeichert sind und der Speicher
- mindestens einen ersten Speicherbereich (350) für auf den Inhaber der ersten ID-Wallet (300) ausgestellte überprüfbare digitale Nachweise aufweist, sowie
- mindestens einen zweiten Speicherbereich (360) für vertrauenswürdige digitale Nachweise und/oder Nachweisketten, welche auf vom Inhaber der ersten ID-Wallet (300) als vertrauenswürdig eingestufte Akteure ausgestellt sind, wobei die vertrauenswürdigen digitalen Nachweise und/oder Nachweisketten jeweils wenigstens einen ersten öffentlichen kryptografischen Schlüssel aufweisen.

3. System nach Anspruch 2, **dadurch gekennzeichnet, dass** die erste ID-Wallet (300) dazu ausgelegt ist, die Integrität solcher vertrauenswürdiger digitaler Nachweise, die einen öffentlichen kryptografischen Schlüssel aufweisen und deren öffentlicher kryptografischer Schlüssel einer im vertrauenswürdigen digitalen Nachweis genannten digitalen Identität zugeordnet ist, kryptografisch zu prüfen und zu speichern.

4. System nach einem der Ansprüche 2 oder 3, **dadurch gekennzeichnet, dass** die überprüfbaren digitalen Nachweise jeweils einen DID des Ausstellers aufweisen und
- das erste Anwendungsprogramm (200) so konfiguriert ist, dass es nur dem vom zweiten Hardware-Sicherheitsmodul (50a) aufgewiesenen Anwendungsprogramm (200a) ermöglicht ist, Registereinträge von digitalen Nachweisen im Register (203) digitaler Nachweise des ersten Hardware-Sicherheitsmodul (50) zu speichern, wobei diese Registereinträge entweder vom Aussteller direkt kommen und durch das erste Anwendungsprogramm (200) geprüft wird, ob der Eintrag vom Anwendungsprogramm (200a) signiert wurde oder die Registereinträge als übertragbar markiert sind und/oder
- auf einen DID des Inhabers der ersten ID-Wallet (300) ausgestellt sind
und das erste Anwendungsprogramm (200) konfiguriert ist, einen Hashwert eines überprüfbaren digitalen Nachweises im Register (203) digitaler Nachweise zu speichern oder zu löschen, wobei die Registereinträge überprüfbarer digitaler Nachweise mindestens eine Zustandsvariable aufweisen, wobei durch einen Zustand der Zustandsvariable bestimmt ist, ob der jeweilige überprüfbare digitale Nachweis kopierbar und/oder durch die erste ID-Wallet (300) auf die zweite ID-Wallet (300a) verleihbar und/oder übertragbar ist.

5. System nach einem der vorhergehenden Ansprüche, **dadurch gekennzeichnet, dass** das Installateurs-Schlüsselregister (201) des ersten Hardware-Sicherheitsmodul (50) mindestens einen ersten nicht auslesbaren geheimen symmetrischen Schlüssel aufweist, der dazu ausgelegt ist, mittels eines symmetrischen Verschlüsselungsverfahrens, die Erstellung mindestens eines Kommunikationsschlüssels zur verschlüsselten Kommunikation mit dem zweiten Hardware-Sicherheitsmodul (50a) zu ermöglichen, wobei das zweite Hardware-Sicherheitsmodul (50a) ein Installateurs-Schlüsselregister (201a) aufweist und das Installateurs-Schlüsselregister (201a) des zweiten Hardware-Sicherheitsmodul (50a) denselben nicht auslesbaren geheimen symmetrischen Schlüssel aufweist.

6. System nach einem der vorhergehenden Ansprüche, **dadurch gekennzeichnet, dass** das Installateurs-Schlüsselregister (201) des ersten Hardware-Sicherheitsmoduls (50) mindestens einen zweiten nicht auslesbaren geheimen symmetrischen Schlüssel aufweist, der dazu ausgelegt ist, Änderungen durch einen Installateur im Installateurs-Schlüsselregister (201) des ersten Hardware-Sicherheitsmodul (50) durchzuführen.

7. Verfahren zur sicheren Kommunikation zwischen zwei Systemen nach einem der vorhergehenden Ansprüche zur Überprüfung und/oder Übertragung von digitalen Nachweisen, insbesondere von überprüfbaren digitalen Nachweisen, wobei die erste ID-Wallet (300) mit dem ersten Hardware-Sicherheitsmodul (50) in Verbindung steht und die zweite ID-Wallet (300a) mit dem zweiten Hardware-Sicherheitsmodul (50a) in Verbindung steht, wobei das erste Anwendungsprogramm (200) des ersten Hardware-Sicherheitsmoduls (50)
- mindestens einen kryptografischen Schlüssel erzeugt und/oder verwaltet, wobei der Schlüssel dazu dient, mindestens einen überprüfbaren digitalen Nachweis in der ersten ID-Wallet (300) zu signieren und/oder zu prüfen
- eine sichere Kommunikation mittels asymmetrischer Kryptographie zwischen dem ersten Hardware-Sicherheitsmodul (50) und dem zweiten Hardware-Sicherheitsmodul (50a) aufbaut, wobei die Verschlüsselung durch das erste Hardware-Sicherheitsmodul (50) erfolgt und jedes Hardware-Sicherheitsmodul (50) jegliche Übertragung privater Schlüssel aus dem Schlüsselregister heraus oder in dieses hinein verhindert,
- verhindert, dass das Anwendungsprogramm (200) des ersten Hardware-Sicherheitsmoduls (50) sich selbst Inhalte in sein eigenes Register (203) digitaler Nachweise schreibt und
- mindestens einen vorrotierten Schlüssel erzeugt und in einem Identitäts-Schlüsselregister (202) des ersten Hardware-Sicherheitsmodul (50) speichert, wobei das erste Hardware-Sicherheitsmodul (50) die Anwendungsprogramm-HSM-Schnittstelle (210) aufweist, die Anwendungsprogramm-HSM-Schnittstelle (210) öffentliche kryptografische Schlüssel exportiert, wobei das Register (203) digitaler Nachweise Signaturen, mindestens einen DID eines Austellers und Zustandsparameter der im Speicherbereich (350) für digitale Nachweise registrierten digitalen Nachweise aufweist.

8. Verfahren nach Anspruch 7, **dadurch gekennzeichnet, dass** durch den Zustand mindestens einer Zustandsvariable mindestens eines Registereintrages im Register (203) digitaler Nachweise des ersten Hardware-Sicherheitsmoduls (50) der zu diesem Registereintrag zugeordnete überprüfbare digitale Nachweis in der ersten ID-Wallet (300) als
- kopierbar oder nicht kopierbar gekennzeichnet ist, und/oder
- an die zweite ID-Wallet (300a) übertragbar oder nicht übertragbar gekennzeichnet ist und/oder
- an die zweite ID-Wallet (300a) verleihbar oder nicht verleihbar gekennzeichnet ist.

9. Verfahren nach Anspruch 7 oder 8, **dadurch gekennzeichnet, dass**
- im ersten Speicherbereich für digitale Nachweise (350) auf den Inhaber der ersten ID-Wallet (300) ausgestellte überprüfbare digitale Nachweise gespeichert werden und/oder
- im zweiten Speicherbereich (360) der ersten ID-Wallet (300) auf vom Inhaber der ersten ID-Wallet (300) als vertrauenswürdig eingestufte Akteure ausgestellte vertrauenswürdige digitalen Nachweise und/oder Nachweisketten gespeichert werden, wobei die vertrauenswürdigen digitalen Nachweise und/oder die Nachweisketten jeweils wenigstens einen ersten öffentlichen kryptografischen Schlüssel aufweisen.

10. Verfahren nach einem der Ansprüche 7 bis 9, **dadurch gekennzeichnet, dass**
- das erste Hardware-Sicherheitsmodul (50) mindestens einen digitalen Nachweis mit einem durch die erste ID-Wallet (300) auf Basis eines Zufallswertes generierten symmetrischen Software-Schlüssel verschlüsselt,
- der so generierte Schlüssel durch das erste Hardware-Sicherheitsmodul (50) verschlüsselt wird, wobei ein abgeleiteter Schlüssel erzeugt, wird aus
o dem mindestens einen im ersten Identitäts-Schlüsselregister (202) gespeicherten privaten Schlüssel,
o dem öffentlichen Schlüssel des in einem, auf dem zweiten Hardware-Sicherheitsmodul (50a) vorhandenen zweiten Identitäts-Schlüsselregister (202a) gespeicherten privaten Schlüssel,
o dem mindestens ersten nicht auslesbaren geheimen symmetrischen Schlüssel des ersten Installateurs-Schlüsselregisters (201),
o dem Zufallswert,
- der verschlüsselte digitale Nachweis mit dem unter Zuhilfenahme des abgeleiteten Schlüssels den symmetrischen Software-Schlüssel an das zweite Hardware-Sicherheitsmodul (50a) verschlüsselt überträgt,
- die zweite ID-Wallet (300a) den verschlüsselten symmetrischen Software-Schlüssel zusammen mit dem Zufallswert entnimmt und an das zweite Hardware-Sicherheitsmodul (50a) überträgt,
- das zweite Anwendungsprogramm (200a) einen symmetrischen Schlüssel erzeugt, aus
o dem mindestens einen im zweiten Identitäts-Schlüsselregister (202a) gespeicherten privaten Schlüssel,
o dem öffentlichen Schlüssel des in einem, auf dem ersten Hardware-Sicherheitsmodul (50) vorhandenen ersten Identitäts-Schlüsselregister (202) gespeicherten privaten Schlüssel,
o dem mindestens ersten nicht auslesbaren geheimen symmetrischen Schlüssel des ersten Installateurs-Schlüsselregisters (201),
o dem Zufallswert,
- das zweite Anwendungsprogramm (200a) den so gebildeten symmetrischen Schlüssel benutzt, um den symmetrischen Software-Schlüssel zu entschlüsseln und an die zweite ID-Wallet (300a) überträgt
- die zweite ID-Wallet (300a) den digitalen Nachweis mit dem symmetrischen Software-Schlüssel entschlüsselt.

11. Verfahren nach einem der Ansprüche 7 bis 10, **dadurch gekennzeichnet, dass** im ersten Speicherbereich (350) und/oder im zweiten Speicherbereich (360) digitale Nachweise gespeichert werden, welche einen oder mehrere andere im zweiten Speicherbereich (360) gespeicherte digitale Nachweise referenzieren.

12. Verfahren nach einem der Ansprüche 7 bis 11, **dadurch gekennzeichnet, dass** das erste Hardware-Sicherheitsmodul (50) das erste Anwendungsprogramm (200) ausführt und das erste Anwendungsprogramm (200) das dem mindestens einen DID zugehörige mindestens eine, zu einer asymmetrischen Verschlüsslung geeignete Schlüsselpaar und/oder den mindestens einen vorrotierten Schlüssel erzeugt und das Schlüsselpaar und/oder den vorrotierten Schlüssel im Identitäts-Schlüsselregister (202) des ersten Hardware-Sicherheitsmoduls (50) speichert, wobei das Anwendungsprogramm (200) auf dem Hardware-Sicherheitsmodul (50) gespeicherte öffentliche kryptografische Schlüssel mittels der Anwendungsprogramm-HSM-Schnittstelle exportiert.

13. Verfahren nach einem der Ansprüche 7 bis 12, **dadurch gekennzeichnet, dass** die erste ID-Wallet (300) mittels der ID-Wallet-zu-HSM-Kommunikationsschnittstelle (330) über die Anwendungsprogramm-HSM-Schnittstelle (210) mit dem ersten Anwendungsprogramm (200) kommuniziert und so einen Datenaustausch zwischen dem ersten Anwendungsprogramm (200) und der ersten ID-Wallet (300) ermöglicht.

14. Verwendung eines Systems nach einem der Ansprüche 1 bis 6 und/oder eines Verfahrens nach einem der Ansprüche 7 bis 13 zur Ausstellung und/oder Präsentation und/oder Überprüfung von digitalen Nachweisen, wobei die digitalen Nachweise ausgewählt sind aus Tickets, Urkunden, Wertmarken, Schuldscheinen und/oder digitaler Währung.

15. Computerprogrammprodukt, welches ein Verfahren eines der Ansprüche 7 bis 13 implementiert.

## Claims

1. A system for the secure issuance, receipt, presentation and verification of digital credentials between two actors of a common digital ID ecosystem, at least comprising:
- at least one first hardware security module (50) which is constructed such that its functions can only be controlled by using an application-HSM interface (210) of a first application (200) and the first application (200) is configured to manage registries (201, 202, 203), the registries (201, 202, 203) being designed as at least one installer's key registry (201) for storing at least one cryptographic key, at least one identity key registry (202) for storing at least one private key and at least one digital credentials registry (203),
- at least one first ID wallet (300) comprising at least one ID-wallet-to-ID-wallet communication interface (340) that is suitable for communication with at least one second ID wallet (300a),
- at least one first digital terminal (10 or 11 or 20 or 30 or 40) on which the first ID wallet (300) is installed, the first ID wallet (300) being connected to the first hardware security module (50) by means of an ID-wallet-to-HSM communication interface (330) and being designed to communicate with the first application (200) using the application-HSM interface (210),
- at least one first application (200) which is stored on the first hardware security module (50) and is designed to establish, control and manage communication between the first hardware security module (50) and the first digital terminal (10), as well as to carry out computing operations on the first hardware security module (50),
whereby
- the first hardware security module (50) has the at least one identity key registry (202) and the at least one installer's key registry (201) for storing at least one cryptographic key and the cryptographic key stored in the installer's key registry (201) is configured so that it enables symmetrically encrypted communication between the first application (200) stored on the first hardware security module (50) and a second application (200a) stored on a second hardware security module (50a) by means of the first ID wallet (300) and a second ID wallet (300a) equipped with at least the ID-wallet-to-ID-wallet communication interface (340a) that is suitable for communication with the first ID wallet (300),
- the first hardware security module (50) has at the least one identity key registry (202) for storing at least one private key,
- the first hardware security module (50) has the at least one digital credentials registry (203), the digital credentials registry (203) being configured to contain digital credential registry entries, the registry entries comprising digital credential designations as well as hash values for these digital credentials, information about an issuer, signatures and statuses of these digital credentials,
- the first hardware security module (50) is adapted to
o perform cryptographic computing operations,
o generate, store, delete, manage and/or store in the identity key registry (202) of the first hardware security module (50), at least one self-sovereign identity, SSI, and at least one key pair belonging to the SSI that is suitable for asymmetric encryption and/or at least one pre-rotated key by means of the first application (200), the suitable key pair comprising a private key and a public key,
o manage at least one hash value calculated for the SSI public key, defined as a decentralized identifier, DID, in the **ID** wallet (300),
- the first hardware security module (50)
o prevents any transfer of private keys from or into the identity key registry (202) of the first hardware security module (50), and
∘ allows transfers of public keys via the application-HSM interface (210)
- the first application (200) is configured to generate pre-rotated keys and to store them in an identity key registry (202) of the hardware security module (50), the hardware security module (50) comprising the application-HSM interface (210), which is designed to export public cryptographic keys, the digital credential registry (203) having at least one issuer DID and status parameters of the digital credentials registered in the digital credential memory area (350).

2. The system according to claim 1, **characterized in that** the first ID wallet (300) has at least one memory which is suitable for containing encrypted digital credentials, keys for encrypting the digital credentials being stored in the hardware security module (50) and the memory having
- at least one first memory area (350) for digital credentials for verifiable digital credentials issued to the holder of the first ID wallet (300), and
- at least one second memory area (360) for trusted digital credentials and/or chains of credentials issued to actors classified as trustworthy by the holder of the first ID wallet (300), the trusted digital credentials and/or chains of credentials each having at least one first public cryptographic key.

3. The system according to either claim 2, **characterized in that** the first ID wallet (300) is designed to cryptographically verify and store the integrity of trusted digital credentials which have a public cryptographic key and of which the public cryptographic key is associated with a digital identity mentioned in the trusted digital credential.

4. The system according to any one of claims 2 or 3, **characterized in that** the verifiable digital credentials each have an issuer DID, and
- the first application (200) is configured such that only the application (200a) provided by the second hardware security module (50a) is able to store digital credential registry entries in the digital credentials registry (203) of the first hardware security module (50), these registry entries either coming directly from the issuer and the first application (200) checking whether the entry has been signed by the application (200i) or the registry entries are marked as transferable, and/or
- is issued to a DID of the holder of the first ID wallet (300)
and the first application (200) is configured to store or delete a hash value for a verifiable digital credential in the digital credentials registry (203), the registry entries for verifiable digital credentials having at least one status variable, the status of the status variable determining whether each verifiable digital credential can be copied and/or lent and/or transferred by the first ID wallet (300) to a second ID wallet (300a).

5. The system according to any one of the preceding claims, **characterized in that** the installer's key registry (201) of the first hardware security module (50) has at least one first non-readable secret symmetric key which is designed to enable the creation of at least one communication key for encrypted communication with the second hardware security module (50a) by means of a symmetric encryption method, the second hardware security module (50a) having an installer's key registry (201a) and the installer's key registry (201a) of the second hardware security module (50a) having the same non-readable secret symmetric key.

6. The system according to any one of the preceding claims, **characterized in that** the installer's key registry (201) of the first hardware security module (50) has at least one second non-readable secret symmetric key which is designed to carry out changes by an installer in the installer's key registry (201) of the first hardware security module (50).

7. A method for secure communication between two systems according to any one of the preceding claims for the verification and/or transmission of digital credentials, in particular verifiable digital credentials, whereby the first ID wallet (300) is connected to the first hardware security module (50) and the second ID wallet (300a) is connected to the second hardware security module (50a), the first application (200) of the first hardware security module (50)
- generating and/or managing at least one cryptographic key, the key being used to sign and/or verify at least one verifiable digital credential in the first ID wallet (300),
- establishing secure communication by means of asymmetric cryptography between the first hardware security module (50) and the second hardware security module (50a), the encryption process being carried out by the first hardware security module (50) and each hardware security module (50) preventing any transfer of private keys from or into the key registry,
- preventing the application (200) of the first hardware security module (50) from writing content into its own digital credentials registry (203) itself and
- generates the at least one pre-rotated key and stores it in the identity key registry (202) of the first hardware security module (200), the first hardware security module (50) having the application-HSM interface (210), the application-HSM interface (210) exporting public cryptographic keys, the digital credential registry (203) having signatures, least one issuer DID and status parameters of the digital credentials registered in the digital credential memory area (350).

8. The method according to claim 7, **characterized in that** the status of at least one status variable of at least one registry entry in the digital credentials registry (203) of the first hardware security module (50) characterizes the verifiable digital credential associated with this registry entry in the first ID wallet (300) as
- being copyable or non-copyable, and/or
- being transferable or non-transferable to the second ID wallet (300a), and/or
- being lendable or not lendable to the second ID wallet (300a).

9. The method according to claim 7 or 8, **characterized in that**
- verifiable digital credentials issued to the holder of the first ID wallet (300) are stored in the first memory area for digital credentials (350), and/or
- trustworthy digital credentials and/or chains of credentials issued to actors classified as trustworthy by the holder of the first ID wallet (300) are stored in the second memory area (360) of the first ID wallet (300), the trustworthy digital credentials and/or chains of credentials each having at least the the first public cryptographic key.

10. The method according to any one of claims 7 to 9, **characterized in that**
- the first hardware security module (50) encrypts at least one digital credential with a symmetric software key generated by the first ID wallet (300) on the basis of a random value,
- the key thus generated is encrypted by the first hardware security module (50), a derived key being generated from
o the at least one private key stored in the first identity key registry (202),
o the public key of the private key stored in a second identity key registry (202a) provided on the second hardware security module (50a),
o the at least first non-readable secret symmetric key of the first installer's key registry (201),
∘ the random value,
- the encrypted digital credential with which the symmetric software key transmitted in encrypted form to the second HSM using the derived key,
- the second ID wallet (300a) extracts the encrypted symmetric software key together with the random value and transmits them to the second hardware security module (50a),
- the second application (200a) generates a symmetric key from
∘ the at least one private key stored in the second identity key registry (202),
∘ the public key of the private key stored in a first identity key registry (202) provided on the first hardware security module (50),
∘ the at least first non-readable secret symmetric key of the first installer's key registry (201),
∘ the random value,
- the second application (200a) uses the symmetric key thus formed to decrypt the symmetric software key and transmits to the second ID wallet (300a)
- the second ID wallet (300a) decrypts the digital credential using the symmetric software key.

11. The method according to any one of claims 7 to 10, **characterized in that** digital credentials are stored in the first memory area (350) and/or in the second memory area (360), which reference one or more other digital credentials stored in the second memory area (360).

12. The method according to any one of claims 7 to 11, **characterized in that** the first hardware security module (50) executes the first application (200) and the first application (200) generates the at least one key pair associated with the at least one DID that is suitable for asymmetric encryption and/or a pre-rotated key and stores the key pair and/or the pre-rotated key in the identity key registry (202) of the first hardware security module (50), the application (200) exporting public cryptographic keys stored on the hardware security module (50) by means of the application-HSM interface.

13. The method according to any one of claims 7 to 12, **characterized in** the first ID wallet (300) communicates with the first application (200) by means of the HSM-application programming interface (330), thus enabling data to be exchanged between the first application (200) and the first ID wallet (300).

14. Use of a system according to any one of claims 1 to 6 and/or of a method according to any one of claims 7 to 13 for issuing and/or presenting and/or verifying digital credentials, the digital credentials being selected from tickets, official documents, tokens, promissory notes and/or digital currency.

15. A computer program product which implements a method according to any one of claims 7 to 13.

## Revendications

1. Système pour l'émission, la réception, la présentation et la vérification sécurisées d'accréditations numériques entre deux acteurs dans un écosystème d'identité numérique partagé, comprenant au moins les caractéristiques suivantes :
- au moins un premier module de sécurité matériel (50) conçu de telle sorte que ses fonctions ne puissent être contrôlées qu'à l'aide d'une interface application-MSM (210) d'une première application (200) et la première application (200) étant configurée pour gérer des registres (201, 202, 203), chacun des registres (201, 202, 203) étant conçu comme au moins un registre de clé d'installateur (201) pour le dépôt d'au moins une clé cryptographique, au moins un registre de clé d'identité (202) destiné au dépôt d'au moins une clé privée et au moins un registre (203) d'accréditations numériques.
- au moins un premier portefeuille d'identité (300) ayant au moins une interface de communication portefeuille d'identité à portefeuille d'identité (340) adaptée à la communication avec au moins un deuxième portefeuille d'identité (300a),
- au moins un premier terminal numérique (10 ou 11 ou 20 ou 30 ou 40) sur lequel le premier portefeuille d'identité (300) est installé, dans lequel le premier portefeuille d'identité (300) est connecté au premier module de sécurité matériel (50) via une interface de communication portefeuille d'identité à MSM (330) et est conçu pour communiquer avec la première application (200) en utilisant l'interface application-MSM (210),
- au moins une première application (200) stockée sur le premier module de sécurité matériel (50), conçu pour établir, contrôler et gérer la communication entre le premier module de sécurité matériel (50) et le premier terminal numérique (10), et pour effectuer des opérations de calcul sur le premier module de sécurité matériel (50),
où
- le premier module de sécurité matériel (50) comporte l'au moins un registre de clé d'identité (202) et l'au moins un registre de clé d'installateur (201) pour stocker au moins une clé cryptographique, et la clé cryptographique stockée dans le registre de clé d'installateur (201) est configurée pour permettre une communication chiffrée symétrique entre la première application (200) stockée sur le premier module de sécurité matériel (50) et une deuxième application (200a) stockée sur un deuxième module de sécurité matériel (50a), en utilisant le premier portefeuille d'identité (300) et un deuxième portefeuille d'identité (300a) équipé d'au moins une interface de communication portefeuille d'identité à portefeuille d'identité (340a) adaptée à la communication avec le premier portefeuille d'identité (300),
- le premier module de sécurité matériel (50) qui comprend l'au moins un registre de clé d'identité (202) pour le dépôt d'au moins une clé privée,
- le premier module de sécurité matériel (50) comprenant l'au moins un registre (203) d'accréditations numériques, lequel registre (203) d'accréditations numériques est configuré pour contenir des entrées de registre d'accréditations numériques, les entrées de registre comprenant des désignations d'accréditations numériques ainsi que des valeurs de hachage de ces accréditations numériques, des informations sur un émetteur, des signatures et des états de ces accréditations numériques,
- le premier module de sécurité matériel (50) est configuré,
o pour effectuer des calculs cryptographiques,
o pour générer, stocker, supprimer, gérer et/ou stocker dans le registre de clés d'identité (202) du premier module de sécurité matériel (200) au moyen du premier première application (200) au moins une identité auto-souveraine, IAS, et au moins une paire de clés appartenant à la IAS et adaptée au chiffrement asymétrique et/ou au moins une clé pré-rotée, dans laquelle la paire de clés adaptée comprend une clé privée et une clé publique,
o pour gérer au moins une valeur de hachage calculée de la clé publique IAS, définie comme un identifiant décentralisé, IDD, dans le portefeuille d'identité (300),
- le premier module de sécurité matériel (50)
o empêche toute transmission de clés privées hors ou vers le registre de clés d'identité (202) du premier module de sécurité matériel (50) et
o permet des transmissions de clés publiques via l'interface application-MSM (210)
- la première application (200) est configuré pour générer des clés pré-rotées et les stocker dans le registre de clé d'identité (202) du module de sécurité matériel (50), dans lequel le module de sécurité matériel (50) possède l'interface application-MSM (210) conçue pour exporter des clés cryptographiques publiques, dans lequel le registre (203) d'accréditation numérique contient des signatures, au moins un IDD d'un émetteur et des paramètres d'état de l'accréditation numérique enregistrés dans la zone de mémoire d'accréditation numérique (350).

2. Système selon la revendication 1, **caractérisé en ce que** le premier portefeuille d'identité (300) comporte au moins une mémoire adaptée pour contenir des accréditations numériques chiffrées, les clés de chiffrement des accréditations numériques étant stockées dans le module de sécurité matériel (50) et la mémoire
- comporte au moins une première zone de stockage (350) pour les accréditations numériques vérifiables émises au titulaire du premier portefeuille d'identité (300), ainsi que
- au moins une deuxième zone de stockage (360) pour des accréditations numériques fiables et/ou les chaînes d'accréditation émises aux acteurs jugés fiables par le titulaire du premier portefeuille d'identité (300), dans laquelle les accréditations numériques fiables et/ou les chaînes d'accréditation comprennent chacune au moins une première clé cryptographique publique.

3. Système selon la revendication 2, **caractérisé en ce que** le premier portefeuille d'identité (300) est conçu pour vérifier cryptographiquement et stocker l'intégrité de telles accréditations numériques fiables qui possèdent une clé cryptographique publique et dont la clé cryptographique publique est attribuée à une identité numérique nommée dans l'accréditation numérique fiable.

4. Système selon l'une des revendications 2 ou 3, **caractérisé en ce que** chaque accréditation numérique vérifiable possède un IDD de l'émetteur et
- la première application (200) est configuré de telle sorte que seul l'application (200a) comportée par le deuxième module de sécurité matériel (50a) soit autorisé à stocker des entrées de registre d'accréditation numérique dans le registre (203) d'accréditation numérique du premier module de sécurité matériel (50), ces entrées de registre provenant soit directement de l'émetteur et étant vérifiées par la première application (200) pour déterminer si l'entrée a été signée par l'application (200a), soit si les entrées de registre sont marquées comme transférables et/ou
- sont émis à un IDD du titulaire du premier portefeuille d'identité (300)
et la première application (200) est configurée pour stocker ou supprimer une valeur de hachage d'une accréditation numérique vérifiable dans le registre (203) de accréditations numériques, dans lequel les entrées du registre d'accréditations numériques vérifiables ont au moins une variable d'état, dans lequel un état de la variable d'état détermine si l'accréditation numérique vérifiable respective est copiable et/ou prêtable et/ou transférable du premier portefeuille d'identité (300) au deuxième portefeuille d'identité (300a).

5. Système selon l'une des revendications précédentes, **caractérisé en ce que** le registre de clé d'installateur (201) du premier module de sécurité matériel (50) possède au moins une première clé symétrique secrète non lisible conçue pour permettre la création d'au moins une clé de communication pour une communication chiffrée avec le deuxième module de sécurité matériel (50a) au moyen d'une méthode de chiffrement symétrique, dans lequel le deuxième module de sécurité matériel (50a) possède un registre de clé d'installateur (201a) et le registre de clé d'installateur (201a) du deuxième module de sécurité matériel (50a) possède la même clé symétrique secrète non lisible.

6. Système selon l'une des revendications précédentes, **caractérisé en ce que** le registre de clé d'installateur (201) du premier module de sécurité matériel (50) comporte au moins une seconde clé symétrique secrète non lisible conçue pour permettre à un installateur d'effectuer des modifications dans le registre de clé d'installateur (201) du premier module de sécurité matériel (50).

7. Procédé de communication sécurisée entre deux systèmes selon l'une des revendications précédentes pour la vérification et/ou la transmission de accréditations numériques, notamment des accréditations numériques vérifiables, dans lequel le premier portefeuille d'identité (300) est connecté au premier module de sécurité matériel (50) et le deuxième portefeuille d'identité (300a) est connecté au deuxième module de sécurité matériel (50a), dans lequel la première application (200) du premier module de sécurité matériel (50)
- génère et/ou gère au moins une clé cryptographique, la clé étant utilisée pour signer et/ou vérifier au moins une accréditation numérique vérifiable dans le premier portefeuille d'identité (300).
- établit une communication sécurisée utilisant la cryptographie asymétrique entre le premier module de sécurité matériel (50) et le deuxième module de sécurité matériel (50a), dans lequel le chiffrement est effectué par le premier module de sécurité matériel (50) et chaque module de sécurité matériel (50) empêche toute transmission de clés privées vers ou depuis le registre de clés,
- empêche à l'application (200) du premier module de sécurité matériel (50) d'écrire du contenu dans son propre registre (203) de accréditations numériques et
- génère et stocke au moins une clé pré-rotée dans un registre de clé d'identité (202) du premier module de sécurité matériel (50), dans lequel le premier module de sécurité matériel (50) possède l'interface application-MSM (210), l'interface application-MSM (210) exporte des clés cryptographiques publiques, et le registre (203) d'accréditation numérique contient des signatures, au moins un IDD d'un émetteur et des paramètres d'état des l'accréditations numériques enregistrés dans la zone mémoire (350) pour des accréditations numériques.

8. Procédé selon la revendication 7, **caractérisé en ce que** par l'état d'au moins une variable d'état d'au moins une entrée de registre dans le registre (203) d'accréditation numérique du premier module de sécurité matériel (50), l'accréditation numérique vérifiable associée à cette entrée de registre dans le premier portefeuille d'identité (300)
- est marqué comme copiable ou non copiable, et/ou
- est marqué comme transférable vers le deuxième portefeuille d'identité (300a) ou non transférable et/ou
- est marqué comme prêtable ou non prêtable au deuxième portefeuille d'identité (300a).

9. Procédé selon la revendication 7 ou 8, **caractérisé en ce que**
- des accréditations numériques vérifiables émises au titulaire du premier portefeuille d'identité (300) sont stockées dans la première zone de stockage pour les accréditations numériques (350) et/ou
- des accréditations numériques fiables et/ou des chaînes d'accréditation émises à des acteurs classés comme fiables par le titulaire du premier portefeuille d'identité (300) sont stockées dans la deuxième zone de stockage (360) du premier portefeuille d'identité (300, dans lesquelles les accréditations numériques fiables et/ou les chaînes d'accréditation ont chacune au moins une première clé cryptographique publique.

10. Procédé selon l'une des revendications 7 à 9, **caractérisé en ce que**
- le premier module de sécurité matériel (50) chiffre au moins une accréditation numérique avec une clé logicielle symétrique générée par le premier portefeuille d'identité (300) sur la base d'une valeur aléatoire,
- la clé ainsi générée est chiffrée par le premier module de sécurité matériel (50), générant une clé dérivée, à partir de
o l'au moins une clé privée stockée dans le premier registre de clés d'identité (202),
o la clé publique de la clé privée stockée dans un deuxième registre de clé d'identité (202a) situé sur le deuxième module de sécurité matériel (50a),
o au moins la première clé symétrique secrète illisible du premier registre de clés d'installateur (201),
o la valeur aléatoire
- l'accréditation numérique cryptée transmet la clé logicielle symétrique au deuxième module de sécurité matériel (50a) sous forme cryptée, à l'aide de la clé dérivée,
- le deuxième portefeuille d'identité (300a) extrait la clé logicielle symétrique chiffrée ainsi que la valeur aléatoire et la transfère au deuxième module de sécurité matériel (50a),
- la deuxième application (200a) génère une clé symétrique, à partir de
o l'au moins une clé privée stockée dans le deuxième registre de clés d'identité (202a),
o la clé publique de la clé privée stockée dans le premier registre de clé d'identité (202) situé sur le premier module de sécurité matériel (50),
o l'au moins première clé symétrique secrète illisible du premier registre de clés d'installateur (201),
o la valeur aléatoire,
- la deuxième application (200a) utilise la clé symétrique ainsi générée pour déchiffrer la clé logicielle symétrique et la transfère au deuxième portefeuille d'identité (300a).
- le deuxième portefeuille d'identité (300a) décrypte l'accréditation numérique avec la clé logicielle symétrique.

11. Procédé selon l'une des revendications 7 à 10, **caractérisé en ce que** des accréditations numériques, qui font référence à une ou plusieurs autres accréditations numériques stockées dans la deuxième zone de stockage (360), sont stockées dans la première zone de stockage (350) et/ou dans la deuxième zone de stockage (360).

12. Procédé selon l'une des revendications 7 à 11, **caractérisé en ce que** le premier module de sécurité matériel (50) exécute la première application (200) et que la première application (200) génère l'au moins une paire de clés adaptée au chiffrement asymétrique appartenant au moins un IDD et/ou l'au moins une clé pré-rotée et stocke la paire de clés et/ou la clé pré-rotée dans le registre de clés d'identité (202) du premier module de sécurité matériel (50), l'application (200) exportant les clés cryptographiques publiques stockées sur le module de sécurité matériel (50) via l'interface application-MSM.

13. Procédé selon l'une des revendications 7 à 12, **caractérisé en ce que** le premier portefeuille d'identité (300) communique avec la première application (200) via l'interface de communication portefeuille d'identité-MSM (330) à travers l'interface application-MSM (210) et permet ainsi un échange de données entre la première application (200) et le premier portefeuille d'identité (300).

14. Utilisation d'un système selon l'une quelconque des revendications 1 à 6 et/ou d'un procédé selon l'une quelconque des revendications 7 à 13 pour l'émission et/ou présentation et/ou vérifcation des accréditations numériques, dans lesquelles les accréditations numériques sont sélectionnées parmi les billets, certificats, jetons, billets à ordre et/ou monnaie numérique.

15. Produit de programme informatique qui met en œuvre une méthode de l'une quelconque des revendications 7 à 13.
